(19) Europäisches Patentamt
European Patent Office
Office européen des brevets

(11) **EP 4 198 502 A1**

(12) **EUROPEAN PATENT APPLICATION**

(43) Date of publication:
**21.06.2023 Bulletin 2023/25**

(21) Application number: **21215692.1**

(22) Date of filing: **17.12.2021**

(51) International Patent Classification (IPC):
**G01N 22/00** $^{(2006.01)}$    **G01R 27/26** $^{(2006.01)}$
**G01R 29/08** $^{(2006.01)}$    **G01S 7/40** $^{(2006.01)}$

(52) Cooperative Patent Classification (CPC):
**G01N 22/00; G01R 27/2617; H01Q 1/42;**
G01R 29/0871; G01S 7/03; G01S 7/4004

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Bayerische Motoren Werke Aktiengesellschaft
80809 München (DE)**

• **Perisens GmbH
85622 Feldkirchen (DE)**

(72) Inventors:
• **Pfeiffer, Florian
85551 Kirchheim b. München (DE)**
• **Fabbri, Tiziano
85579 Neubiberg (DE)**

(74) Representative: **Stellbrink & Partner
Patentanwälte mbB
Widenmayerstrasse 10
80538 München (DE)**

(54) **PARAMETER DETERMINATION OF AN OBJECT UNDER TEST USING THICKNESS DATA AND TRANSMISSION MEASUREMENT**

(57) The present invention relates to a method comprising utilizing a measuring system (1) comprising a first antenna (10a) and a second antenna (10b) facing each other from opposite sides of a measurement region (30); transmitting with the first antenna (10a) a measurement signal (40) through the measurement region (30), while a target portion (55) of the object under test (50) is in the measurement region (30) such that the measurement signal (40) traverses through the target portion (55); receiving with the second antenna (10b) a received portion (45) of the measurement signal (40); determining at least one property of the target portion (55) based on the received portion (45) of the measurement signal (40) and a thickness of the target portion (55). The present invention also relates to a system configured to carry out the method.

**Fig. 1**

Processed by Luminess, 75001 PARIS (FR)

## Description

## Field of invention

The present invention generally relates to a method and system for measuring or testing radomes, particularly, radomes for automotive radars.

## Introduction

Radars are detection systems or sensors that use electromagnetic waves to determine range, angle or velocity of objects. A radar usually comprises a transmitting unit, or antenna, that radiates electromagnetic waves. The frequency of the emitted electromagnetic wave, or the operational frequency of the radar, can be within a wide range of the electromagnetic spectrum, usually within the radio and microwave part of the spectrum and typically depends on the use scenario of the radar. The lower the operational frequency of the radar the higher the detection range, as the transmitted electromagnetic waves are less attenuated or affected by external factors, e.g., by weather conditions, radar covers, etc. On the other hand, high frequencies can offer a better accuracy and resolution of detection due to the smaller wavelength, but at the same time are highly susceptible to attenuation.

An emerging technology is the use of radar systems in automotive industry. More particularly, radars operating in high frequencies, such as, 20 to 160 GHz, usually between 70 and 90 GHz, can provide a very high range resolution and achievable accuracy. This feature makes such radars preferable for use in parking assistants, blind spot monitoring, brake assistant systems, etc. However, due to the very high operating frequency, such radar systems can suffer from high signal attenuation.

A radar is usually set to operate in open-air conditions. Thus, the radar is exposed to different weather conditions, dust or other external particles and forces that may damage the radar and/or lower the accuracy of its measurements. In cars the radars are wanted to be covered for aesthetic reasons so that they are not visible. To alleviate the above, a radome, also referred as a radar dome or radar cover, is implemented around the radar, hence, protecting it against external factors and/or reducing its salience. Typically, the bumper or the emblem of a vehicle is used as a radome to cover and hide the radar.

While hiding the radar (e.g., behind a bumper or emblem of car) can offer protection to the radar and can decrease its salience, it can also affect the operation of the radar. Due to dielectric characteristics of the radome material, the radome may cause unwanted reflections, attenuation, beam deflection, beam broadening, sidelobe increase, etc. These side effects may introduce errors in the radar sensing. The unwanted effects caused by the radome, particularly attenuation and reflection, can become significant when the radar operates in high frequencies. For example, the radars operating in high frequencies, usually used in automotive industry are highly susceptible to suffer from attenuation and other unwanted effects caused by the radome.

Thus, in one hand it is advantageous for various reasons (e.g., protection against weather conditions or external elements or forces and/or improving vehicle design) to cover the radar sensor with a radome. On the other hand, the radome can introduce unwanted effects (e.g., signal attenuation and reflections) that may increase the inaccuracy and/or decrease the detection and/or sensing capabilities of the radar.

Furthermore, the use of radar systems in vehicles, such as for parking assistance, blind spot monitoring, braking assistance, etc., are prone to strict requirements set by legal standards, such that maximum safety can be ensured for traffic participants. These standards or regulations usually require high detection accuracy.

Some attempts have been made trying to alleviate the shortcomings of using a radome.

For example, US 5,371,505 A relates to a method for determining signal transmission characteristics for a selected area of a radome.

US 3,936,736 A relates to a hand-held universal radome tester which is an instrument for locating discontinuities and impurities inside a radome wall and for determining the quality of an anti-static paint coating over the exterior surface of a radome.

EP 3,258,288 A1 relates to a method and system for testing the transmission and reflection properties of a radome.

US 5,066,921 A relates to a system for testing radomes to detect defects and evaluate the radome effect on antenna patterns.

F. Pfeiffer and E. M. Biebl, "Inductive Compensation of High-Permittivity Coatings on Automobile Long-Range Radar Radomes," in IEEE Transactions on Microwave Theory and Techniques, vol. 57, no. 11, pp. 2627-2632, Nov. 2009, doi: 10.1109/TMTT.2009.2031931, shows a method of describing the propagation of electromagnetic waves through a multi-layered dielectric slab using Transmission Line theory.

## Summary

The present invention seeks to overcome or at least alleviate the shortcomings and disadvantages of the prior art. It is therefore an object of the present invention to provide methods and systems for measuring and testing radomes.

These objects are met by the robot and the method of the present invention.

Existing complex transmission measurement alone, may not provide the required parametrization of an object under test, which can be a complex multilayer sample or a complex multilayer radome. For example, typical transmission measurements alone may not allow the measurement of reflectivity and/or permittivity of an object under test.

On the other hand, performing a reflection measurement can be challenging and may require complex measurement systems. Firstly, it may require at least one extra receiving antenna configured to measure reflections created by the object under test. Generally, a plurality of antennas, instead of one, may be required to ensure that all the reflections created by the object under test are being captured. Therefore, a more complex and costly system may be required. Secondly, a precise alignment between the object under test and the receiving antenna(s) configured to measure reflections may be required. Such an alignment can be challenging to be created and maintained during the measurement. In addition, said alignment is dependent on the geometry of the object under test (e.g., the shape of its surface). Therefore, precise knowledge about the geometry of the object under test needs to be known. For example, a curvature of the surface of the object under test may reflect electromagnetic waves way from the receiving antenna. As such, a mischaracterization of the reflection parameters of the object under test would be performed.

The present invention proposes performing a thickness measurement or obtaining thickness data and performing a transmission measurement of an object under test, and based thereon calculating reflectivity and other parameters (for example the effective permittivity) of the object under test. This can be particularly advantageous for characterizing radomes, such as, automotive radomes (i.e., automotive radar covers) and/or for validating the radar transparency of radomes at microwave frequencies, such as, at 20-160 GHz.

The present invention seeks to overcome or at least alleviate the shortcomings and disadvantages of the prior art. It is therefore an object of the present invention to provide methods and systems for measuring and testing radomes.

These objects are met by the method and system of the present invention.

In a first aspect the present invention relates to a method which comprises utilizing a measuring system. The measuring system comprises a first antenna and a second antenna facing each other from opposite sides of a measurement region. That is, the first antenna and the second antenna can be placed at a distance from each other and facing each other therefore defining a space between them, said space being the measurement region. The method comprises transmitting with the first antenna a measurement signal through the measurement region, while a target portion of the object under test is in the measurement region. This way, the measurement signal traverses through the target portion.

The method further comprises receiving with the second antenna a received portion of the measurement signal. That is, the measurement signal generated by the first antenna can be incident on the target portion of the object under test. Part of the energy of the measurement signal can be reflected by the object under test, another part of the energy of the measurement signal can be absorbed by the object under test and yet another part of the energy of the measurement signal can traverse through the object under test and be received by the second antenna. The part of energy of the measurement signal that can traverse through the object under test and be received by the second antenna can be referred to as the received portion of the measurement signal.

It will be understood, that the first antenna and the second antenna can be aligned with respect to each other, such that, a signal transmitted by the first antenna can be received by the second antenna. Similarly, a signal transmitted by the second antenna can be received by the second antenna. Moreover, the measurement signal can refer to a volume of space that is between the first antenna and the second antenna and that can be traversed by the measurement signal.

The method comprises determining at least one property of the target portion based on the received portion of the measurement signal and a thickness of the target portion.

Determining at least one property of the target portion based on the received portion of the measurement signal and a thickness of the target portion can be performed by a processing system.

The measuring system can comprise the processing system.

In a second aspect the present invention relates to a measuring system comprising the first antenna, the second antenna and a processing system. The first antenna and the second antenna are configured to face each other from opposite sides of a measurement region. In addition, the first antenna is configured to transmit the measurement signal through the measurement region and the second antenna is configured to receive the received portion of the measurement signal. The processing system is configured to determine the at least one property of the target portion of an object under test placed in the measurement region based on the received portion of the measurement signal and a thickness of the target portion.

In a third aspect, the present invention relates to a first use of the measuring system and/or of the present method to measure the effects of a radar cover on electromagnetic waves traversing through the radar cover and wherein the radar cover is intended for covering at least one radar.

In a fourth aspect, the present invention relates to a second use of the measuring system and/or of the present method to measure the effects of a radar cover on electromagnetic waves traversing through the radar cover and wherein the radar cover is intended for covering at least one radar used in a vehicle.

In a fifth aspect, the present invention relates to a third use of the measuring system and/or of the present method during the production of a radar cover.

In a sixth aspect, the present invention relates to a fourth use of the measuring system and/or of the present method during the production or assembly of a system comprising the radar cover, such as, during the assembly of a vehicle comprising the radar cover.

In the following, features of the present invention are discussed. For the sake of brevity, some of these features may be discussed in relation to only one of the aspects of the present invention. However, it will be understood that the following features of the present invention apply mutatis mutandis to each aspect of the present invention.

The object under test can be a radome (which can also be referred to as a radar dome). The radome can be a structural enclosure that can be implemented or provided around a radar sensor (or radar) for protecting the radar. The radome can be weatherproof, thus, protecting the radar sensor from humidity, temperature, dust, etc. While in some cases the radome can be built specifically for protecting the radar, in other cases the radar can be hidden behind a structure, which can play the role of the radome. For example, in cars or robots, the radars can be hidden inside the enclosures of the car or robot (e.g., hidden behind the bumpers of the car or behind the emblems of the cars) for aesthetic reasons as well as for protecting the radars. The enclosure can thus serve as a radome, hiding the radar sensor and protecting it from external factors, such as, weather.

However, as the radome interrupts the path of the signals transmitted and received by the radar sensor, the radome may affect these signals and as a consequence may lower the sensitivity and accuracy of the radar sensing. For example, the radome may cause attenuation, reflection, refraction, scattering, phase shift, frequency shift, change of direction of travel and change of the waveform of the electromagnetic waves that pass through it.

Thus, in one hand it can be advantageous to use the radome for protecting the radar and/or for aesthetic reasons, while on the other hand the radome interferes with the sensing of the radar. The present invention, addresses this issue by providing, inter alia, a method of measuring a property of the radome.

It will be understood that principles of the present invention apply similarly to any single or multilayer dielectric surface.

The property may comprise a dielectric property of the object under test. Additionally or alternatively, the property may comprise a property that can be derived from or that can depend on a dielectric property of the object under test. For example, the property can comprise a scattering parameter, e.g., a transmissivity and/or a reflectivity corresponding to the object under test. Alternatively or additionally, the property can indicate an effect of an object under test on electromagnetic waves that become incident on a surface of the object under test. For example, the property can be a measure of an effect that the object under test can have on electromagnetic waves that become incident on a surface of the object under test. For example, the property may indicate an attenuation, a phase shift, a frequency shift, a change of the waveform and/or a change of the direction of travel of an electromagnetic wave incident on a surface of the object under test.

The property can correspond to a transmission side of the object under test and/or to a reception side of the object under test. The property can be in the singular or in the plural.

Determining a property of the object under test can be advantageous as it can facilitate alleviating and compensating for the effect that the object under test can have on the sensing of the radar that it can cover. Hence, the accuracy of the radar covered by the object under test can be improved. This can be particularly advantageous for object under tests used in vehicles and robots, wherein safety of their operation can depend on the accurate operation of the sensors they comprise.

Further, the present method can further allow testing object under tests if they meet pre-set requirements. For example, present invention can allow measuring a change (e.g., attenuation, reflection, phase shift, frequency shift) of a signal caused by the object under test and can determine if the object under test meets a pre-set requirement stating the maximum tolerable change that the object under test can cause to electromagnetic waves. This can be particularly advantageous for radars used in cars, i.e., automotive radars. Automotive radars operate in high frequency ranges, such as, 70 - 90 GHz. Thus, the influence of the object under test in such high frequency signals can be significant. Moreover, strict requirements are generally imposed by respective authorities, on the accuracy that automotive radar sensors should comprise, to ensure safety of traffic participants. Thus, testing object under tests, such as, radomes, and determining their transparency to electromagnetic waves can be advantageous for evaluating whether an object under test or a radar system meets pre-set (e.g., legal or standard) requirements.

Moreover, as it will become more apparent in the following, the present invention can also facilitate measuring a reflectivity of the object under test. While prior technologies require performing a reflection measurement to determine reflectivity, the present invention can allow measuring the reflectivity of the object under test without the need of performing a reflection measurement. Instead, the present invention utilizes a transmission measurement and a thickness of the target portion of the object under test to determine a reflectivity of the target portion of the object under test.

The property of the target portion of the object under test can also be referred to as a local property of the object under test. For example, a reflectivity of the target portion of the object under test can also be referred to as a local reflectivity of the object under test.

The property of the target portion of the object under test can be a dielectric property.

In some embodiments, the at least one property of the target portion can comprise a plurality of properties of the target portion.

Each one of the at least one property of the target portion can indicate a respective change from a group of changes that the target portion causes to the measurement signal.

The group of changes can comprise attenuation, phase shift and frequency shift.

That is, in some embodiments, a plurality of properties of the target portion can be determined, wherein the properties are of different types. In other words, the at least one property can comprise a plurality of properties of different types. The types can comprise attenuation, phase shift and frequency shift.

The at least one property of the target portion can comprise a reflection property of the target portion. The reflection property can be determined based on the received portion of the measurement signal and based on the thickness of the target portion. The reflection property of the target portion can be indicative of a reflected portion of an incident electromagnetic wave that can be reflected by the target portion. The reflection property can comprise a plurality of reflectivity values, wherein each of the reflectivity values can be associated with a respective frequency or wavelength. That is, the reflection property can comprise a spectral curve. Each pair comprising a reflectivity value and a respective frequency or wavelength can indicate the reflectivity that the target portion can comprise when a signal with the respective frequency or wavelength becomes incident on the target portion.

The at least one property of the target portion can comprise an effective permittivity.

In some embodiments, at least one object property of the object under test can be determined based on the at least one property of the target portion.

The object property can indicate an evaluation of an effect that the object under test cause to an electromagnetic signal traversing through it.

The object property can indicate a usability of the object under test. For example, the object property can indicate whether the object under test can be used as a radome. In yet another example, the object property can indicate whether the object under test can be used a radome for a radar used in a vehicle. The vehicle can for example be a truck, van, car or robot.

The object property can indicate a determination whether the object under test complies with at least one standard. For example, the at least standard can define at least one maximum tolerable change that the object under test can be allowed to cause to an electromagnetic signal traversing through it. The object property can indicate whether a change caused by the object under test to an electromagnetic signal traversing through it is smaller than the respective maximum tolerable change. The change can for example be an attenuation, reflectivity, frequency shift and/or phase shift.

The object property can indicate a validation of the transparency of the object under test at microwave frequencies, such as, at 20-160 GHz.

The object property can indicate an evaluation of the transparency of the object under test at microwave frequencies, such as, at 20-160 GHz. The evaluation can be expressed as a rating or as a percentage.

The object under test can be a radome. That is, the object under test can be configured to cover at least one radar sensor, such that, signals transmitted and/or received by the radar sensor can be intercepted by the object under test.

The object under test can be configured to cover a radar in a vehicle. That is, the object under test can be a radome used in automotive industry.

The object under test can be a covering component used in a vehicle. For example, the object under test can be an outer surface of a vehicle.

The object under test cab be an emblem of a vehicle. In such embodiments, the emblem of the vehicle can be used to cover a radar of the vehicle.

The object under test can be a bumper of a vehicle. In such embodiments, the bumper of the vehicle can be used to cover a radar of the vehicle. That is, the radar sensor of the vehicle can be hidden behind the bumper of the vehicle.

The object under test can consist of multiple layers. That is, the object under test can comprise a complex multi-layered structure. For example, the object under test can consist of a plastic substrate, several layers of pain and a protective clear coating.

At least two of the layers can comprise different materials.

The object under test can comprise at least one substrate layer and at least one coating layer covering the substrate layer. The substrate layer can comprise a plastic material. The at least one coating layer can comprise a paint layer and/or a protective clear coating layer.

In some embodiments, at least two different parts of the object under test can consist of different layers. That is, at least two different parts of the object under test can comprise different structures. For example, the parts can comprise the same substrate, but can be covered with different coating layers. Alternatively, the parts can comprise different substrates altogether. In such embodiments, it can be advantageous to determine at least one property for each part. That is, the object under test and the first and second antenna can be aligned such that each of the different parts of the object under test can become target portions. Therefore, a respective property can be determined for each of the parts.

In some embodiments, a transmission property of the target portion of the object under test can be determined. The transmission property of the target portion can be indicative of a transmitted portion of an incident electromagnetic wave that can be transmitted thought the target portion. The transmission property can comprise a plurality of transmissivity values, wherein each of the transmissivity values can be associated with a respective frequency or wavelength. That is, the transmission property can comprise a spectral curve. Each pair comprising a transmissivity value and a respective frequency or wavelength can indicate the transmissivity that the target portion can comprise when a signal with the respective frequency or wavelength becomes incident on the target portion.

The transmission property can be determined based on the measurement signal and the received portion of the measurement signal. That is, the transmission property can be determined based on the transmission measurement without necessarily using the thickness of the target portion of the object under test.

Determining the transmission property of the target portion can comprise determining a transmission coefficient of the target portion.

The transmission property of the target portion can be indicative of a ratio of an amplitude of an electromagnetic wave after traversing through the target portion over the amplitude of the electromagnetic wave before traversing through the target portion and when it became incident on the target portion.

It will be understood that in a logarithmic scale, the above ratio can be represented as a difference.

The transmission property of the target portion can be indicative of an attenuation caused by the target portion to an electromagnetic wave traversing through the target portion.

The transmission property of the target portion can be indicative of a phase shift caused by the target portion to an electromagnetic wave traversing through the target portion.

The transmission property can be represented by a complex number, wherein the real part of the complex number can be indicative of an attenuation caused by the target portion to an electromagnetic wave traversing through the target portion and the imaginary part of the complex number can be indicative of a phase shift caused by the target portion to an electromagnetic wave traversing through the target portion.

The transmission property of the target portion can be determined based on the amplitude of the measurement signal as transmitted and on the amplitude of the received portion of the measurement signal.

The amplitude of the measurement signal transmitted can be predetermined. For example, it can be a pre-set value.

In some embodiments, the thickness of the target portion can be obtained.

For example, the thickness of the target portion can be obtained by obtaining a predetermined thickness of the target portion.

The predetermined thickness of the target portion can be obtained from a memory device. In some embodiments, the memory device can be part of a database. The memory device can be integrated with the measuring system or it can be an external memory device.

The predetermined thickness of the target portion can be obtained from a remote device via a communication network, configured to allow sending and receiving data to/from the remote device.

The predetermined thickness of the target portion can be obtained (i.e., received) from a user interface, wherein the user interface can be configured to allow a user to input data indicative of the thickness of the target portion. For example, the user interface can comprise an input device, such as, a keyboard, mouse, trackpad, touchscreen, audio recorder and/or camera. The user interface can be part of the measuring system. Alternatively, the user interface can be part of a user device and the measuring system can be configured to be connected for electronic data communication with the user device.

Obtaining the thickness of the target portion can comprise measuring the thickness of the target portion by utilizing a thickness measuring device. That is, the thickness of the target portion can be obtained by measuring it with a thickness measuring device. In some embodiments, the measuring system can comprise the thickness measuring device. Alternatively, the thickness measuring device can be external to the measuring system.

In some embodiments, the thickness of the target portion can be measured prior to providing the object under test in the measurement region. This can typically be the case in embodiments wherein the thickness measuring device is external to the measuring system. Similarly, the thickness of the target portion can be measured after providing the object under test in the measurement region. In any case, the thickness of the target portion can be measured prior to determining the at least one property.

In some embodiments, the thickness of the target portion can be measured prior to providing the target portion of the object under test in the measurement region. This can for example include the case wherein the object under test is provided in the measurement region, but a different portion to the target portion (i.e., the one intended to be measured) is located in the measurement region. For example, the target portion can be located in a region facing a thickness measuring device and not in the measurement region.

In some embodiments, the thickness of the target portion can be measured during the step of transmitting with the first antenna the measurement signal through the measurement region, while the target portion of the object under test is in the measurement region. Additionally or alternatively, the thickness of the target portion can be measured during the step of receiving with the second antenna the received portion of the measurement signal. In such embodiments, the thickness measuring device, the first antenna and the second antenna are configured to be used for measuring the same portion of the object under test.

In some embodiments, the thickness measuring device, the first antenna and the second antenna can be activated simultaneously or at least quasi-simultaneously. This can allow transmitting the measurement signal or receiving the received portion of the measurement signal to be performed simultaneously or at least quasi-simultaneously with measuring the thickness of the measuring device. Therefore, the present technology can be time efficient.

The thickness measuring device can be a non-contact thickness measuring device. This can be advantageous as it can allow measuring the thickness of the target portion without the risk of damaging the object under test. In addition, it can allow placing the thickness measuring device at a distance from the object under test. For example, the thickness measuring device can be placed at a close to the first and second antenna, thereby allowing for a compact structure of the measuring system.

The thickness measuring device can comprise at least one sensor. Each of the sensors can be configured to measure a distance between itself and a respective distance sensor target. The distance sensor target can comprise an area located within the field of view of the sensor.

Each of the at least one sensor can be a displacement sensor.

The thickness measuring device can be configured to output at least one distance measured by the at least one sensor and the processing system can be configured to determine the thickness of the target portion based thereon.

At least one of the at least one sensor can be an optical displacement sensor.

The optical displacement sensor can be configured to measure distance according to the confocal principle.

The measuring system can be configured to allow providing the object under test in a predetermined position in the measurement region. In such embodiments, all of the at least one sensor can face the same side of the object under test. That is, by providing the object under test in a predetermined position, the thickness of the target portion can be determined by providing the sensor(s) of the thickness measuring device on one side of the object under test.

The thickness measuring device can comprise at least a first and a second sensor wherein the first sensor can be positioned on the same side of the measurement region as the first antenna and the second sensor can be positioned on the same side of the measurement region as the second antenna. In other words, the thickness measuring device can comprise at least two sensors facing opposite sides of the object under test. This alleviates the need to provide the object under test in a predetermined position for measuring thickness.

The thickness measuring device can comprise a plurality of first sensors, all positioned on the same side of the measurement region as the first antenna.

The thickness measuring device can comprise a plurality of second sensors, all positioned on the same side of the measurement region as the second antenna.

This can facilitate increasing confidence when determining thickness.

The object under test and the thickness measuring device can be aligned such that at least one of the at least one sensor can comprise its respective distance sensor target on the target portion of the object under test. That is, at least one of the at least one distance sensor target can be located in the target portion of the object under test. This can allow the local thickness of the object under test at the target portion to be measured.

The thickness of the target portion of the object under test can be measured by triggering the thickness measuring device. Upon triggering of the thickness measuring device, each of the at least one displacement sensor can measure a respective distance between itself and the respective distance sensor target. As discussed above, at least one of the at least one distance sensor target can be located in the target portion of the object under test. Thus, the thickness of the target portion can be determined based on at least one of the measured distances.

In some embodiments, using the Additionally, second antenna a reverse measurement signal can be transmitted through the measurement region, while the target portion of the object under test is in the measurement region such that the measurement signal traverses through the target portion. With the first antenna a received portion of the reverse measurement signal can be received. Based on the received portion of the reverse measurement signal and the thickness of the target portion at least one reverse property of the target portion can be determined.

In such embodiments, the first antenna and the second antenna can be transceiver antennas.

That is, the present technology can also be utilized to perform a reverse measurement of the object under test. The reverse measurement can be identical to the measurement as discussed above, with the only difference that the measurement signal can be transmitted from the second antenna to the first antenna, i.e., the measurement signal follows a reversed trajectory. This can allow determining the effect of the object under test on signals that become incident on either side of the object under test.

For example, in embodiments wherein the object under test is a radome, the effect of the radome on signals transmitted and received by the radar can be determined.

The at least one property of the target portion can be determined further based on at least one reference. The reference can indicate the effect that the environment (without the object under test) can have on the measurement signal. Thus, the effect of the environment can be compensated for. This can increase the accuracy of determining the property of the object under test.

In some embodiments, a reference measurement can be performed to determine the at least one reference.

Performing the reference measurement can comprise transmitting a reference measurement signal through the measurement region and receiving a reference received portion of the reference measurement signal and determining the at least one reference based on the at least one reference received portion of the reference measurement signal. That is, performing the reference measurement can comprise performing a transmission measurement, similar to the one performed for determining a property (e.g., a transmission property) of the radome.

Performing the reference measurement can comprise performing the reference measurement with an empty measurement region thereby obtaining at least one empty reference. That is, there can be no external element positioned in the measurement region while performing the reference measurement to obtain at least one empty reference. For example, the empty measurement region can be a space filled with air.

The at least one empty reference can comprise a path loss coefficient indicating an attenuation caused by the empty measurement region. That is, the path loss coefficient can indicate an attenuation caused by the environment between the first antenna and the second antenna.

The at least one empty reference can comprise a path loss model, a path loss coefficient and/or a path loss exponent.

The at least one empty reference can be determined analytically and/or empirically.

The at least one empty reference can be measured periodically, e.g., hourly, daily, weekly, monthly, etc. In some embodiments, the at least one empty reference can be measured before providing the object under test in the measurement region.

In some embodiments, performing a reference measurement can comprise performing the reference measurement with a reference sample in the measurement region thereby obtaining at least one sampled reference.

The reference sample can be a sample with known properties. For example, at least one or all of the scattering parameters and/or dielectric properties of the reference samples can be known and/or derivable.

The reference sample can comprise a reflective material, such as, a highly reflective material.

For example, the reference sample can be a metal plate.

The at least one sampled reference can comprise a reference attenuation indicating an attenuation caused by the measurement region and the reference sample.

In some embodiments, performing a reference measurement can comprise performing the reference measurement with an empty measurement region and the reference measurement with the reference sample in the measurement region. That is, in some embodiments at least one empty reference and at least one sampled reference can be obtained. Typically, both the the reference measurement with an empty measurement region and the reference measurement with the reference sample in the measurement region can be performed repeatedly. Advantageously, the former can be performed more frequently than the latter. For example, the reference measurement with an empty measurement region can be performed before providing the object under test in the measurement region, hourly or daily.

Determining the at least one property of the target portion further based on at least one reference can comprise determining the at least one property based on a comparison of the at least one received portion of the measurement signal with the at least one reference.

For example, a sample with a reflection loss of 10dB can be provided. During the reference measurement to determine the reference the reflection loss of the sample can be measured to be 11dB (instead of 10dB). In this example, the reference can indicate an offset of +1dB. Then, when determining a reflection property of the object under test, the offset of +1dB can be utilized to compensate for the effect of the environment.

Determining the at least one property of the target portion further based on at least one reference can comprise determining the property based on a comparison of the at least one reference received portion with the at least one received portion.

Determining the at least one property of the target portion further based on at least one reference can comprise determining the at least one property of the target portion further based on a comparison of the reference measurement signal with the measurement signal if the reference measurement signal is different from the measurement signal.

It will be understood that a comparison can comprise performing at least one calculation.

In some embodiments, the method can comprise providing the target portion of the object under test in the measurement region.

The object under test can be provided in a predetermined position in the measurement region. For example, the object under test can be provided at a particular distance from the first and/or second antenna.

In some embodiments, the object under test can be provided in a support structure in the measurement region. This can facilitate keeping the object under test static during the motion.

At the same time this can facilitate providing the object under test at a predetermined or known position between the antennas.

Providing the target portion of the object under test in the measurement region can comprise either moving the measuring system towards the object under test, or moving the object under test towards the measuring system or both, such that the target portion of the object under test is positioned in the measurement region.

In some embodiments, the measuring system can comprise a positioning system configured to change a relative position between the object under test and measuring system.

The positioning system can comprise a positioning apparatus, said positioning apparatus configured to move the first antenna and the second antenna.

The positioning apparatus can be a robotic arm.

The positioning system can comprise a handling apparatus configured to move the object under test.

In some embodiments, a plurality of target portions of the object under test can be defined. This can facilitate obtaining more detailed and accurate information regarding the effect that object under test can have on electromagnetic signals. This can allow generating property maps indicating the property of multiple portions of the object under test. This can be particularly advantageous when different portions of the object under test comprise different materials.

Defining a plurality of target portions of the object under test can comprise defining the plurality of target portions with a density of 5 to 10 target portions per centimetre square, such as, 8 target portions per centimetre square.

The target portions can be uniformly distributed on at least a region of the object under test.

Each of the target portions can comprise an area between 50 to 500 millimetre square, preferably 130 to 150 millimetre square, such as, 140 millimetre square.

The relative position between the object under test and the measuring system can be changed. In particular the relative position between the object under test and the first and second antenna can be changed. This can allow different target portions to be placed in the measurement region. Therefore, for each of the target portions a respective property can be determined.

Changing the relative position between the object under test and the measuring system can comprise either moving the object under test, or moving the measuring system or both.

Changing the relative position between the object under test and the measuring system can comprise a plurality of sub-motions.

The positioning system can be configured to perform a plurality of sub-motions to change the relative position between the object under test and the measuring system.

After each sub-motion a respective target portion of the plurality of target portions can be positioned in the measurement region.

The method can be performed iteratively for each target portion. Similarly, the system can be configured to perform the method iteratively. Thereby for each target portion of the plurality of target portions at least one respective property based on the respective received portion of the respective measurement signal and a respective thickness of the target portion can be measured. That is, for each target portion a transmission measurement and optionally a thickness measurement can be performed.

That is, the first antenna can be configured to transmit, after each sub-motion, a measurement signal through the measurement region such that it traverses a respective target portion. The second antenna can be configured to receive, after each sub-motion, a received portion of the measurement signal transmitted after the respective sub-motion. That is, after each sub-motion, the processing system can be configured to trigger the first antenna and the second antenna. The processing system can be configured to determine for each target portion of the plurality of target portions at least one respective property based on the respective received portion of the respective measurement signal that traverses the target portion and a respective thickness of the target portion.

The processing system can be configured to obtain, after each sub-motion, data indicative of the thickness of the respective target portion from the thickness measuring device.

The thickness measuring device can be configured to measure, after each sub-motion, the thickness of the respective target portion. That is, after each sub-motion the processing system can trigger the thickness measuring device.

In such embodiments, the method can comprise determining the object property based on the at least one property of each target portion.

The at least one property of the target portion can be output.

The measuring system can comprise an output device configured to output the at least one property of the target portion.

The output device can comprise at least one display.

The output device can comprise at least one data transmission device configured to transmit data to a device external to the measuring system.

Outputting the at least one property of the target portion can comprise outputting associated data indicative of the position of the target portion in the object under test. The associated data can be referred to as location data.

Outputting the at least one property of the target portion can comprise displaying the at least one property.

The measuring system can comprise a clamp structure.

The clamp structure can comprise a first arm configured for mounting therein or thereon the first antenna and a second arm configured for mounting therein or thereon the second antenna and a base frame, wherein the first arm and the second arm protrude from the same side of the base frame. That is, the first arm and the second arm can be protrude from the base frame such that a substantially U-shaped structure of the clamp can be created. The clamp structure can provide support for the first and second antenna. Having a U-shape, it can facilitate positioning the first and second antenna such that they can face each-other. Additionally, the clamp structure, particularly the base frame, can facilitate keeping the distance (and in general the relative position) between the first and the second antenna constant. Moreover, the clamp structure can be advantageous as it can allow moving the first antenna and the second antenna, without changing the relative position between them. Thus, the antennas can be transported without changing the alignment between them.

The first antenna can be provided in or on the first arm and the second antenna can be provided in or on the second arm.

At least one sensor of the thickness measuring device can be provided in or on the first arm and/or at least one sensor of the thickness measuring device can be provided in or on the second arm.

In embodiments wherein the thickness measuring device can comprise a first and a second sensor, the first sensor can be provided in or on the first arm and the second sensor can be provided in or on the second arm.

The clamp structure can be formed as a single part - i.e., without mounting or assembling or attaching smaller parts together.

The method can comprise utilizing the clamp structure.

The clamp structure and the positioning apparatus can be configured to be physically connected to each other and the positioning apparatus can be configured to move the clamp structure.

The physical connection between the clamp structure and the positioning apparatus can be configured to allow rotation of the clamp structure. This can be advantageous as it can allow adjusting the incidence angle of the measurement signal on the target portion.

The target portion can comprise a first surface facing the first antenna and a second surface facing the second antenna. In embodiments wherein the object under test is a radome, the first surface can face the radar and the second surface can be an external surface. In such embodiments, the first surface can be referred to as the transmission side, while the second surface can be referred to as the receiving side.

The measurement signal can be incident on the first surface and can exit the target portion through the second surface. In embodiments wherein the object under test is a radome, the measurement signal can follow a similar path to the one followed by signals emitted by the radar covered by the radome.

The reverse measurement signal can be incident on the second surface and can exit the target portion through the first surface. In embodiments wherein the object under test is a radome, the reverse measurement signal can follow a similar path to the one followed by signals received by the radar covered by the radome.

The thickness of the target portion can indicate a Euclidean distance between the first surface and the second surface.

Put differently, the thickness of the target portion can indicate a minimum traversable distance inside the target portion by an electromagnetic wave being perpendicularly incident on a surface of the target portion.

In yet other words, the thickness of the target portion can be measured along a direction of motion of the measurement signal, when the measurement signal can be perpendicularly incident on a surface of the target portion.

The measurement signal can be an electromagnetic wave.

The measurement signal can comprise a frequency in the microwave frequency range.

The measurement signal can comprise a frequency between 20 GHz to 160 GHz.

The measurement signal can comprise a frequency between 70 GHz to 90 GHz.

The measurement signal can be a modulated measurement signal. This can facilitate differentiating the received portion of the measurement signal from interfering signals.

The first antenna and the second antenna can be aligned such that a main lobe of the first antenna and a main lobe of the second antenna intersect. This can be advantageous as it can allow for efficient transmission of the measurement signal from the first antenna to the second antenna.

In some embodiments, the measuring system can further comprise at least one reflector positioned in the measurement region. That is, the at least one reflector can be positioned between the first antenna and the object under test and/or between the object under test and the second antenna. The at least one reflector can be configured to deviate the reflections that may be created between the antennas and the object under test. Thus, it can be advantageous to position at least one reflector in an inclined manner (i.e., not perpendicular to the signal transmission path or the boresight axis of first antenna and/or of the second antenna).

The at least one reflector can be positioned inclined, with an inclination angle between 30° to 80° or between 100° to 150° relative to the direction of travel of the measurement signal.

In some embodiments, receiving with the second antenna a received portion of the measurement signal can comprise generating a measured data set. That is, the processing system can be configured to generate a measured data set based on the received portion of the measurement signal. For example, the processing system can receive a signal from the second antenna and based thereon can generate the measured data set.

The measured data set can comprise an amplitude and/or a phase of the received portion of the measurement signal. That is, receiving with the second antenna a received portion of the measurement signal can comprise measuring a complex amplitude of the received portion of the measurement signal and thereby generating a measured data set.

In some embodiments, determining at least one property of the target portion based on the received portion of the measurement signal and the thickness of the target portion can comprise utilizing a set of N parameters corresponding to the object under test.

N can be a natural number greater than or equal to 3. That is because, a layer of the target portion of the object under test can be characterized by three parameters: permittivity, loss tangent and thickness. With such parameters, further properties of the layer can be derived, such as, reflection and transmission property. In the simplest case, the object under test can comprise a single layer and in such an example, the set of N parameters can comprise 3 parameters.

The object under test can comprise at least one layer, and wherein the set of N parameters can comprise for each layer a respective first layer-permittivity parameter, a respective second layer-permittivity parameter, and a respective layer thickness parameter. The first and second layer-permittivity parameters can be indicative of a complex permittivity of the respective layer. For example, the first layer-permittivity parameter can be indicative of the real part of the complex permittivity and the second layer-permittivity parameter can be indicative of the imaginary part of the complex permittivity. For example, the second layer-permittivity parameter can be a loss tangent.

The set of N parameters can be dependent on a frequency, a polarization and/or an incidence angle of the measurement signal.

In some embodiments, the method can comprise providing at least N-3 of the N parameters and determining the remaining parameters of the N parameters. The remaining parameters of the N parameters can also be referred to as the unknown parameters of the N parameters.

Providing at least N-3 of the N parameters can comprise providing N-3 parameters of the N parameters.

Providing N-3 parameters can be advantageous as it can allow determining the remaining 3 parameters. That is because the present technology can allow obtaining 3 different types of information, namely: amplitude and phase of the received portion of the measurement signal and the thickness of the target portion of the object under test. Based thereon, 3 of the N parameters can be determined. It will be understood, that any N-3 parameters can be provided and based thereon any remaining 3 parameters can be determined.

Providing at least N-3 of the N parameters can comprise predetermining the at least N-3 parameters.

In some embodiments, at least one of the at least N-3 parameters can be predetermined based on a prior measurement. For example, a thickness of a layer of the object under test (e.g., of the substrate layer before coating is applied) can be measured beforehand.

In some embodiments, at least one of the at least N-3 parameters can be predetermined based on an assumption. For example, the permittivity of the substrate layer of the object under test can be assumed to be the same with the permittivity of a measured sample consisting of the same material as the substrate layer.

Determining the remaining (i.e., unknown) parameters of the N parameters can comprise utilizing for at least one of the remaining parameters at least one corresponding constraint.

The at least one constraint can be indicative of a range of values and wherein the remaining parameter to which said at least one constraint corresponds to, can comprise a value within the range of values indicated by said at least one constraint. For example, the at least one constraint can correspond to a thickness of a layer of the object under test and said constraint can indicate a range of values that the thickness can comprise. For example,

The method can comprise providing the at least one constraint.

Utilizing and/or providing the at least one constraint can be advantageous as in some instances there can be ambiguity regarding the values of the remaining parameters of the N parameters. The at least one constraint can facilitate dissolving such ambiguities.

Determining the remaining parameters of the N parameters can comprise executing a numerical analysis algorithm. This can be advantageous as it can allow determining the remaining parameters even though there can be no analytical solution. Moreover, it provides a general routine of determining any of the remaining parameters, regardless of what those are.

The numerical analysis algorithm can be an iterative algorithm.

Each iteration of the numerical analysis algorithm can comprise setting a respective value to each of the remaining parameters, calculating based on the N parameters an analytical data set and calculating an error corresponding to the set values based on a comparison of the analytical data set with the measured data set.

Setting a respective value to each of the remaining parameters can be performed in conformity with the at least one constraint. This can be advantageous as it can reduce the amount of iteration since values not conforming with the constraint are not checked.

The analytical data set, similar to the measured data set can comprise, an analytical amplitude of the of the received portion of the measurement signal, an analytical phase of the of the received portion of the measurement signal and/or an analytical thickness of the target portion. In particular the analytical data set indicates what the amplitude, phase and thickness of the measurement signal would have been for the set values of the remaining parameters.

The error corresponding to the set values can indicate a difference (e.g., a squared difference) between the measured data set and the analytical data set.

The numerical analysis algorithm can output the values of the remaining parameters that yield the minimum error. That is, the numerical analysis algorithm can determine the values for the remaining parameters for which the analytical data set best matches the measured data set.

The at least one property of the target portion can be determined based on the output of the numerical analysis algorithm.

Determining at least one property of the target portion based on the received portion of the measurement signal and a thickness of the target portion can comprise determining a reflection coefficient of the target portion of the object under test based on the set of N parameters.

Determining at least one property of the target portion based on the received portion of the measurement signal and a thickness of the target portion can comprise determining an effective permittivity of the target portion of the object under test based on the set of N parameters.

Below exemplary calculations will be provided on how the remaining parameters can be determined. It will be understood that they are provided for sake of illustration only and are not limiting.

For example, for an object under test comprising one layer (i.e., L=1), the set of N parameters can comprise the following set of 3 parameters:

$$(\epsilon_1, \ \tan \delta_1, \ d_1),$$

wherein, $\epsilon_1$ is indicative of a real part of the complex permittivity of the target portion of the object under test, $\tan \delta_1$ is the loss tangent of the complex permittivity of the target portion of the object under test and is indicative of an imaginary part of the complex permittivity and $d_1$, is the thickness of target portion the object under test. It will be understood, that instead of $\tan \delta_1$, any parameter indicative of the imaginary part of the complex permittivity of the target portion of the object under test can be used.

For an object under test comprising L layers, the set of N parameters can comprise:

$$(\epsilon_1, \tan \delta_1, d_1, \ \epsilon_2, \tan \delta_2, d_2, ..., \epsilon_L, \tan \delta_L, d_L)$$

As illustrated, for each of the L layers, a respective complex permittivity and thickness can be provided. Given the above set of N parameters, the property (e.g., dielectric property, such as, reflection coefficient) of the target portion can be calculated using the Transmission Line Theory (for example, as shown in F. Pfeiffer and E. M. Biebl, "Inductive Compensation of High-Permittivity Coatings on Automobile Long-Range Radar Radomes," in IEEE Transactions on Microwave Theory and Techniques, vol. 57, no. 11, pp. 2627-2632, Nov. 2009, doi: 10.1109/TMTT.2009.2031931).

In particular, the i-th layer of the object under test can be described in terms of a phase difference $\phi_i$

through the material and line impedance $Z_i^E$ for E polarization and $Z_i^H$ for H polarization of the measuring signal propagating through the object under test, wherein the measuring signal can be approximated as a plane wave. Each of these parameters can be calculated as:

$$\phi_i = \beta_i \cdot d_i = \frac{2\pi}{\lambda_0} \sqrt{\epsilon_{r,i} \cos(\theta_i)}$$

$$Z_i^E = \frac{\cos(\theta_i)}{\sqrt{\epsilon_{r,i}}} Z_0$$

$$Z_i^H = \cos(\theta_i) \sqrt{\epsilon_{r,i}} \cdot Z_0$$

Wherein, $\beta_i$ is the propagation constant in the direction of travel of the measurement signal, $\lambda_0$ is the free space wavelength, $\epsilon_{r,i}$ is the complex permittivity, $\theta_i$ is the propagation angle relative to normal incidence in the i-th layer, $Z_0$ is the impedance of free space, i.e., 377 Ohm. The angle $\theta_i$ in the material can be calculated based on the incident angle of the measurement signal on that layer using Snell's law.

Based on the above, the transmission matrix (ABCD matrix) can be calculated using:

$$\begin{pmatrix} A & B \\ C & D \end{pmatrix} = \prod_{i=1}^{L} \begin{pmatrix} \cos \phi_i & j Z_i sin\phi_i \\ j \frac{1}{Z_i} sin\phi_i & \cos \phi_i \end{pmatrix}$$

wherein j is the imaginary unit.

Furthermore, the reflection and transmission coefficient can be analytically calculated using:

$$r = \frac{A + B\frac{1}{Z_0} - CZ_0 - D}{A + B\frac{1}{Z_0} + CZ_0 + D}$$

$$t = \frac{2}{A + B\frac{1}{Z_0} + CZ_0 + D}$$

As shown above, the reflection coefficient and transmission coefficient can be calculated analytically based on the complex permittivity and thickness of each layer.

In some embodiments, wherein the object under test can comprise multiple layers, the property of the target portion can be calculated by considering the object under test as comprising a single layer. Based thereon, an effective permittivity can be calculated, i.e., the permittivity that the object under test would have had if composed of a single layer. In other words, for a multi-layered object under test it can be assumed that all the layers comprise the same permittivity. Although such an assumption may introduce some error, it can be advantageous as it can allow simplifying the calculations for determining the property of the target portion. Said assumption can be particularly advantageous when the N-3 parameters of the set of N parameters are not known, as it alleviates the need of providing the N-3 parameters.

The present technology is also defined by the following numbered embodiments.

Below, method embodiments will be discussed. These embodiments are abbreviated by the letter "M" followed by a number. When reference is herein made to method embodiments, these embodiments are meant.

M1. A method comprising:

utilizing a measuring system (1) comprising a first antenna (10a) and a second antenna (10b) facing each other from opposite sides of a measurement region (30);
transmitting with the first antenna (10a) a measurement signal (40) through the measurement region (30), while a target portion (55) of an object under test (50) is in the measurement region (30) such that the measurement signal (40) traverses through the target portion (55);
receiving with the second antenna (10b) a received portion (45) of the measurement signal (40);
determining at least one property of the target portion (55) based on the received portion (45) of the measurement signal (40) and a thickness of the target portion (55).

M2. The method according to any of the preceding embodiments, wherein determining at least one property of the target portion (55) comprises determining a plurality of properties of the target portion (55).

M3. The method according to any of the preceding embodiments, wherein each one of the at least one property of the target portion (55) indicates a respective change from a group of changes that the target portion (55) causes to the measurement signal (40).

M4. The method according to the preceding embodiment, wherein the group of changes comprises attenuation, phase shift and frequency shift.

M5. The method according to any of the preceding embodiments, wherein determining at least one property of the target portion (55) comprises determining a reflection property.

M6. The method according to any of the preceding embodiments, wherein determining at least one property of the target portion (55) comprises determining an effective permittivity.

M7. The method according to any of the preceding embodiments, wherein the method comprises determining at least one object property of the object under test (50) based on the at least one property of the target portion (55).

M8. The method according to the preceding embodiment, wherein the object property indicates an evaluation of an effect that the object under test (50) causes to an electromagnetic signal.

M9. The method according to any of the 2 preceding embodiments, wherein the object property indicates a usability of the object under test (50).

M10. The method according to any of the 3 preceding embodiments, wherein the object property indicates a determination whether the object under test (50) complies with at least one standard.

M11. The method according to any of the 4 preceding embodiments, wherein the object property indicates a validation of the transparency of the object under test (50) at microwave frequencies, such as, at 20-160 GHz.

M12. The method according to any of the preceding embodiments, wherein the object under test (50) is a radome.

M13. The method according to any of the preceding embodiments, wherein the object under test (50) is configured to cover a radar in a vehicle.

M14. The method according to any of the preceding embodiments, wherein the object under test (50) is a covering component used in a vehicle.

M15. The method according to any of the preceding embodiments, wherein the object under test (50) is an emblem of a vehicle.

M16. The method according to any of the preceding embodiments, wherein the object under test (50) is a bumper of a vehicle.

M17. The method according to any of the preceding embodiments, wherein the object under test (50) consists of multiple layers.

M18. The method according to the preceding embodiment, wherein at least two of the layers comprise different materials.

M19. The method according to any of the 2 preceding embodiments, wherein the object under test (50) comprises at least one substrate layer and at least one coating layer covering the substrate layer.

M20. The method according to any of the 3 preceding embodiments, wherein at least two different parts of the object under test (50) consist of different layers.

M21. The method according to any of the preceding embodiments, wherein the method comprises determining a transmission property of the target portion (55).

M22. The method according to the preceding embodiment, wherein the transmission property is determined based on the measurement signal (40) and the received portion (45) of the measurement signal (40).

M23. The method according to any of the 2 preceding embodiments, wherein determining the transmission property of the target portion (55) comprises determining a transmission coefficient of the target portion (55).

M24. The method according to any of the 3 preceding embodiments, wherein the transmission property of the target portion (55) is indicative of a ratio of an amplitude of an electromagnetic wave after traversing through the target portion (55) over the amplitude of the electromagnetic wave before traversing through the target portion (55) and when it became incident on the target portion (55).

It will be understood that in a logarithmic scale, the above ratio can be represented as a difference.

M25. The method according to any of the 4 preceding embodiments, wherein the transmission property of the target portion (55) is indicative of an attenuation caused by the target portion (55) to an electromagnetic wave traversing through the target portion (55).

M26. The method according to any of the 5 preceding embodiments, wherein the transmission property of the target portion (55) is indicative of a phase shift caused by the target portion (55) to an electromagnetic wave traversing through the target portion (55).

M27. The method according to any of the 6 preceding embodiments, wherein the transmission property is represented by a complex number.

M28. The method according to any of the 7 preceding embodiments, wherein determining the transmission property of the target portion (55) is based on the amplitude of the measurement signal (40) as transmitted and on the amplitude of the received portion (45) of the measurement signal (40).

M29. The method according to the preceding embodiment, wherein the amplitude of the measurement signal (40) as transmitted is predetermined.

M30. The method according to any of the preceding embodiments, wherein the method comprises obtaining the thickness of the target portion (55).

M31. The method according to the preceding embodiment, wherein obtaining the thickness of the target portion (55) comprises obtaining a predetermined thickness of the target portion (55).

M32. The method according to any of the 2 preceding embodiments, wherein obtaining the thickness of the target portion (55) comprises obtaining a predetermined thickness of the target portion (55) from a memory device (62).

M33. The method according to any of the 3 preceding embodiments, wherein obtaining the thickness of the target portion (55) comprises receiving the thickness of the target portion (55) from a user interface (64), wherein the user interface (64) is configured to allow a user to input data indicative of the thickness of the target portion (55).

M34. A method according to any of the 4 preceding embodiments, wherein obtaining the thickness of the target portion (55) comprises measuring the thickness of the target portion (55) by utilizing a thickness measuring device (60).

M35. The method according to the preceding embodiment, wherein the step of measuring the thickness of the target portion (55) is performed prior to providing the object under test (50) in the measurement region (30).

M36. The method according to any of the 2 preceding embodiments, wherein the step of measuring the thickness of the target portion (55) is performed prior to providing the target portion (55) of the object under test (50) in the measurement region (30).

M37. The method according to embodiment M34, wherein the step of measuring the thickness of the target portion (55) is performed

    during the step of transmitting with the first antenna (10a) the measurement signal (40) through the measurement region (30), while the target portion (55) of the object under test (50) is in the measurement region (30) and/or

    during the step of receiving with the second antenna (10b) the received portion (45) of the measurement signal (40).

M38. The method according to embodiment M34 or M37, wherein the method comprises activating the thickness measuring device (60), the first antenna (10a) and the second antenna (10b) simultaneously or at least quasi-simultaneously.

M39. The method according to any of 5 preceding embodiments, wherein the thickness measuring device (60) comprises at least one sensor (65), each configured to measure a distance between itself and a respective distance sensor target.

M40. The method according to the preceding embodiment, wherein each of the at least one sensor (65) is a displacement sensor (65).

M41. The method according to any of the 2 preceding embodiments, wherein the method comprises aligning the object under test (50) and the thickness measuring device (60), such that at least one of the at least one sensor (65) comprises its respective distance sensor target on the target portion (55) of the object under test.

M42. The method according to the preceding embodiment, wherein the method comprises triggering the thickness measuring device (60),

upon triggering of the thickness measuring device (60), each of the at least one displacement sensor (65) measuring a respective distance between itself and the respective distance sensor target and determining the thickness of the target portion (55) based on at least one of the measured distances.

M43. The method according to any of the preceding embodiments, wherein the method comprises

transmitting with the second antenna (10b) a reverse measurement signal (40') through the measurement region (30), while the target portion (55) of the object under test (50) is in the measurement region (30) such that the measurement signal (40) traverses through the target portion (55);
receiving with the first antenna (10a) a received portion (45') of the reverse measurement signal (40');
determining at least one reverse property of the target portion (55) based on the received portion (45') of the reverse measurement signal (40') and the thickness of the target portion (55).

That is, in addition a reverse measurement of the object under test (50) can be performed. This can be identical to the measurement as discussed in embodiment M1 and its dependencies, with the only difference that the measurement signal (40) is transmitted from the second antenna (10b) to the first antenna (10a), i.e., the measurement signal (40) follows a reversed trajectory.

M44. The method according to any of the preceding embodiments, wherein the method comprises determining the at least one property of the target portion (55) further based on at least one reference.

M45. The method according to the preceding embodiment, wherein the method comprises performing a reference measurement to determine the at least one reference.

M46. The method according to the preceding embodiment, wherein performing the reference measurement comprises

transmitting a reference measurement signal (40r) through the measurement region (30) and receiving a reference received portion (45r) of the reference measurement signal (40r) and
determining the at least one reference based on the at least one reference received portion (45r) of the reference measurement signal (40r).

M47. The method according to any of the 2 preceding embodiments, wherein performing a reference measurement comprises performing the reference measurement with an empty measurement region (30) thereby obtaining at least one empty reference.

That is, there is no external element positioned in the measurement region (30). For example, the empty measurement region (30) can be a space filled with air.

M48. The method according to the preceding embodiment, wherein the at least one empty reference comprises a path loss coefficient indicating an attenuation caused by the empty measurement region (30).

M49. The method according to any of the 4 preceding embodiments, wherein performing a reference measurement comprises performing the reference measurement with a reference sample (57) in the measurement region (30) thereby obtaining at least one sampled reference.

M50. The method according to the preceding embodiment, wherein the reference sample (57) is a sample with known properties.

M51. The method according to any of the 2 preceding embodiments, wherein the reference sample (57) comprises a reflective material, such as, a highly reflective material.

M52. The method according to any of the 3 preceding, wherein the reference sample (57) is a metal plate.

M53. The method according to any of the 4 preceding embodiments, wherein the at least one sampled reference comprises a reference attenuation indicating an attenuation caused by the measurement region (30) and the reference sample (57).

M54. The method according to any of the preceding embodiments and with the features of embodiments M47 and M49, wherein performing a reference measurement comprises performing the reference measurement with an empty measurement region (30) and the reference measurement with the reference sample (57) in the measurement region (30). M55. The method according to any of the 11 preceding embodiments, wherein determining the at least one property of the target portion (55) further based on at least one reference comprises

determining the at least one property based on a comparison of the at least one received portion (45) of the measurement signal (40) with the at least one reference.

M56. The method according to any of the 12 preceding embodiments, wherein determining the at least one property of the target portion (55) further based on at least one reference comprises
determining the property based on a comparison of the at least one reference received portion (45r) with the at least one received portion (45).

M57. The method according to any of the 13 preceding embodiments, wherein determining the at least one property of the target portion (55) further based on at least one reference comprises

determining the at least one property of the target portion (55) further based on a comparison of the reference measurement signal (40r) with the measurement signal (40) if the reference measurement signal (40r) is different from the measurement signal (40).

It will be understood that a comparison can comprise performing at least one calculation.

M58. The method according to any of the preceding embodiments, wherein the method comprises providing the target portion (55) of the object under test (50) in the measurement region (30).

M59. The method according to the preceding embodiment, wherein providing the target portion (55) of the object under test (50) in the measurement region (30) comprises providing the object under test (50) in a predetermined position in the measurement region (30).

M60. The method according to any of the 2 preceding embodiments, wherein providing the target portion (55) of the object under test (50) in the measurement region (30) comprises providing the object under test (50) in a support structure in the measurement region (30).

M61. The method according to any of the 3 preceding embodiments, wherein providing the target portion (55) of the object under test (50) in the measurement region (30) comprises either moving the measuring system (1) towards the object under test (50), or moving the object under test (50) towards the measuring system (1) or both, such that the target portion (55) of the object under test (50) is positioned in the measurement region (30).

M62. A method according to any of the preceding embodiments, wherein the method comprises defining a plurality of target portions (55) of the object under test (50).

M63. The method according to the preceding embodiment, wherein defining a plurality of target portions (55) of the object under test (50) comprises

defining the plurality of target portions (55) with a density of 5 to 10 target portions (55) per centimetre square, such as, 8 target portions (55) per centimetre square.

M64. The method according to any of the 2 preceding embodiments, wherein the target portions (55) are uniformly distributed on at least a region of the object under test (50).

M65. The method according to any of the 3 preceding embodiments, wherein each of the target portions (55) comprises an area between 50 to 500 millimetre square, preferably 130 to 150 millimetre square, such as, 140 millimetre square.

M66. The method according to any of 4 the preceding embodiments, wherein the method comprises changing the relative position between the object undertest (50) and the measuring system (1).

M67. The method according to the preceding embodiment, wherein changing the relative position between the object under test (50) and the measuring system (1) comprises either moving the object under test (50), or moving the measuring system (1) or both.

M68. The method according to any of the 2 preceding embodiments, wherein changing the relative position between the object under test (50) and the measuring system (1) comprises a plurality of sub-motions.

M69. The method according to the preceding embodiment, wherein after each sub-motion a respective target portion (55) of the plurality of target portions (55) is positioned in the measurement region (30).

M70. The method according to the preceding embodiment, wherein the method is performed iteratively for each target portion (55),

thereby determining for each target portion (55) of the plurality of target portions (55) at least one respective property based on the respective received portion (45) of the respective measurement signal (40) and a respective thickness of the target portion (55).

M71. The method according to the preceding embodiment and with the features of embodiment M7, wherein the method comprises determining the object property based on the at least one property of each target portion (55).

M72. The method according to any of the preceding embodiments, wherein the method comprises outputting the at least one property of the target portion (55).

M73. The method according to the preceding embodiment, wherein outputting the at least one property of the target portion (55) comprises outputting associated data indicative of the position of the target portion (55) in the object under test (50).

M74. The method according to any of the 2 preceding embodiments, wherein outputting the at least one property of the target portion (55) comprises displaying the at least one property.

M75. The method according to any of the preceding embodiments, wherein the target portion (55) comprises a first surface facing the first antenna (10a) and a second surface facing the second antenna (10b).

M76. The method according to the preceding embodiment, wherein the measurement signal (40) is incident on the first surface and exits the target portion (55) through the second surface.

M77. The method according to any of the 2 preceding embodiments and with the features of embodiment M43, wherein the reverse measurement signal (40') is incident on the second surface and exits the target portion (55) through the first surface.

M78. The method according to any of the 3 preceding embodiments, wherein the thickness of the target portion (55) indicates a Euclidean distance between the first surface and the second surface.

M79. The method according to any of the preceding embodiments, wherein the thickness of the target portion (55) indicates a minimum traversable distance inside the target portion (55) by an electromagnetic wave being perpendicularly incident on a surface of the target portion (55).

M80. The method according to any of the preceding embodiments, wherein the thickness of the target portion (55) is measured along a direction of motion of the measurement signal (40).

It will be understood that the definitions of the thickness of the target portion (55) provided in embodiments M78 to M80 are generally equivalent.

M81. The method according to any of the preceding embodiments, wherein the measurement signal (40) is an electromagnetic wave.

M82. The method according to any of the preceding embodiments, wherein the measurement signal (40) comprises a frequency in the microwave frequency range.

M83. A method according to any of the preceding embodiments, wherein the measurement signal (40) comprises a frequency between 20 GHz to 160 GHz.

M84. The method according to any of the preceding embodiments, wherein the measurement signal (40) comprises a frequency between 70 GHz to 90 GHz.

M85. The method according to any of the preceding embodiments, wherein the measurement signal (40) is a modulated measurement signal (40).

M86. The method according to any of the preceding embodiments, wherein the first antenna (10a) and the second antenna (10b) are aligned such that a main lobe of the first antenna (10a) and a main lobe of the second antenna (10b) intersect.

M87. The method according to any of the preceding embodiments, wherein the step of determining at least one property of the target portion (55) based on the received portion (45) of the measurement signal (40) and a thickness of the target portion (55) is performed by a processing system (20).

M88. The method according to the preceding embodiment, wherein the measurement system comprises the processing system (20).

M89. The method according to any of the preceding embodiments, wherein receiving with the second antenna (10b) a received portion (45) of the measurement signal (40) comprises generating a measured data set.

M90. The method according to the preceding embodiment, wherein the measured data set comprises a measured amplitude of the received portion (45) of the measurement signal (40).

M91. The method according to any of the 2 preceding embodiments, wherein the measured data set comprises a measured phase of the received portion (45) of the measurement signal (40).

M92. A method according to any of the 3 preceding embodiments, wherein the measured data set comprises a measured amplitude and a measured phase of the received portion (45) of the measurement signal (40).

M93. The method according to any of the preceding embodiments, wherein determining at least one property of the target portion (55) based on the received portion (45) of the measurement signal (40) and the thickness of the target portion (55) comprises
utilizing a set of N parameters corresponding to the object under test.

M94. The method according to the preceding embodiment, wherein N is a natural number greater than or equal to 3.

M95. The method according to any of the 2 preceding embodiments, wherein the object under test comprises at least one layer, and wherein the set of N parameters comprise for each of the at least one layer

> a respective first layer-permittivity parameter,
> a respective second layer-permittivity parameter, and
> a respective layer thickness parameter,
> wherein the first and second layer-permittivity parameters are indicative of a complex permittivity of the respective layer.

M96. The method according to any of the 3 preceding embodiments, wherein the method comprises providing at least N-3 of the N parameters and determining the remaining parameters of the N parameters.

M97. The method according to the preceding embodiment, wherein providing at least N-3 of the N parameters comprises providing N-3 parameters of the N parameters.

M98. The method according to the preceding embodiment, wherein providing at least N-3 of the N parameters comprises predetermining the at least N-3 parameters.

M99. The method according to any of the 2 preceding embodiments, wherein predetermining the at least N-3 parameters, comprises predetermining at least one of the at least N-3 parameters based on a prior measurement.

M100. The method according to any of the 3 preceding embodiments, wherein predetermining the at least N-3 parameters, comprises predetermining at least one of the at least N-3 parameters based on an assumption.

M101. The method according to any of the 5 preceding embodiments, wherein determining the remaining parameters of the N parameters comprises utilizing for at least one of the remaining parameters at least one corresponding constraint.

M102. The method according to the preceding embodiment, wherein the method comprises providing the at least one constraint.

M103. The method according to any of the 2 preceding embodiments, wherein the at least one constraint is indicative of a range of values and wherein the remaining parameter to which said at least one constraint corresponds to, comprises a value within the range of values indicated by said at least one constraint.

M104. The method according to any of the 8 preceding embodiments, wherein determining the remaining parameters of the N parameters comprises executing a numerical analysis algorithm.

M105. The method according to the preceding embodiment, wherein the numerical analysis algorithm is an iterative algorithm.

M106. The method according to the preceding embodiment and with the features of embodiment M89, wherein each iteration of the numerical analysis algorithm comprises

> setting a respective value to each of the remaining parameters,
> calculating based on the N parameters an analytical data set and
> calculating an error corresponding to the set values based on a comparison of the analytical data set with the measured data set.

M107. The method according to the preceding embodiment and with the features of embodiment M101, wherein setting a respective value to each of the remaining parameters is performed in conformity with the at least one constraint.

M108. The method according to any of the 2 preceding embodiments and with the features of embodiment M90, wherein the analytical data set comprises an analytical amplitude of the of the received portion (45) of the measurement signal (40).

M109. The method according to any of the 3 preceding embodiments and with the features of embodiment M91, wherein the analytical data set comprises an analytical phase of the of the received portion (45) of the measurement signal (40).

M110. The method according to any of the 4 preceding embodiments and with the features of embodiment M92, wherein the analytical data set comprises an analytical amplitude and an analytical phase of the of the received portion (45) of the measurement signal (40).

M111. The method according to any of the 5 preceding embodiments and with the features of embodiment M90, wherein the analytical data set comprises an analytical thickness of the target portion (55).

M112. The method according to any of the 6 preceding embodiments, wherein the method comprises the numerical analysis algorithm outputting the values of the remaining parameters that yield the minimum error.

M113. The method according to the preceding embodiment, wherein the method comprises determining the at least one property of the target portion based on the output of the numerical analysis algorithm.

M114. The method according to any of the preceding embodiments and with the features of embodiment M93, wherein determining at least one property of the target portion (55) based on the received portion (45) of the measurement signal (40) and a thickness of the target portion (55) comprises

determining a reflection coefficient of the target portion (55) of the object under test (50) based on the set of N parameters.

M115. The method according to any of the preceding embodiments and with the features of embodiment M93, wherein determining at least one property of the target portion (55) based on the received portion (45) of the measurement signal (40) and a thickness of the target portion (55) comprises

determining an effective permittivity of the target portion (55) of the object under test (50) based on the set of N parameters.

Below, system embodiments will be discussed. These embodiments are abbreviated by the letter "S" followed by a number. When reference is herein made to system embodiments, these embodiments are meant.

S1. A measuring system (1), comprising:

> a first antenna (10a), a second antenna (10b) and a processing system (20), wherein
> the first antenna (10a) and the second antenna (10b) are configured to face each other from opposite sides of a measurement region (30),
> the first antenna (10a) is configured to transmit a measurement signal (40) through the measurement region (30) and,
> the second antenna (10b) is configured to receive a received portion (45) of the measurement signal (40), and
> the processing system (20) is configured to determine at least one property of a target portion (55) of an object under test (50) placed in the measurement region (30) based on the received portion (45) of the measurement signal (40) and a thickness of the target portion (55).

S2. The measuring system according to any of the preceding system embodiments, wherein the at least one property of the target portion (55) comprises a plurality of properties of the target portion (55).

S3. The measuring system according to any of the preceding system embodiments, wherein each one of the at least one property of the target portion (55) is indicative of a respective change from a group of changes that the target portion (55) causes to the measurement signal (40).

S4. The measuring system according to the preceding embodiment, wherein the group of changes comprises attenuation, phase shift and frequency shift.

S5. The measuring system according to any of the preceding system embodiments, wherein the at least one property of the target portion (55) comprises a reflection property.

S6. The measuring system according to any of the preceding system embodiments, wherein the at least one property of the target portion (55) comprises an effective permittivity.

S7. The measuring system according to any of the preceding system embodiments, wherein the processing system (20) is further configured to determine an object property of the object under test (50) based on the at least one property of the target portion (55).

S8. The measuring system according to the preceding embodiment, wherein the object property is indicative of an evaluation of an effect that the object under test (50) causes to on an electromagnetic signal.

S9. The measuring system according to any of the 2 preceding embodiments, wherein the object property is indicative of a usability of the object under test (50).

S10. The measuring system according to any of the 3 preceding embodiments, wherein the object property is indicative of a determination whether the object under test (50) complies with at least one standard.

S11. The measuring system according to any of the 4 preceding embodiments, wherein the object property is indicative of a validation of the transparency of the object under test (50) at microwave frequencies, such as, at 20-160 GHz.

S12. The measuring system according to any of the preceding system embodiments, wherein the object under test (50) is a radome.

S13. The measuring system according to any of the preceding system embodiments, wherein the object under test (50) is configured to cover a radar in a vehicle.

S14. The measuring system according to any of the preceding system embodiments, wherein the object under test (50) is a covering component used in a vehicle.

S15. The measuring system according to any of the preceding system embodiments, wherein the object under test (50) is an emblem of a vehicle.

S16. The measuring system according to any of the preceding system embodiments, wherein the object under test (50) is a bumper of a vehicle.

S17. The measuring system according to any of the preceding system embodiments, wherein the object under test (50) consists of multiple layers.

S18. The measuring system according to the preceding embodiment, wherein at least two of the layers comprise different materials.

S19. The measuring system according to any of the 2 preceding embodiments, wherein the object under test (50) comprises at least one substrate layer and at least one coating layer covering the substrate layer.

S20. The measuring system according to any of the 3 preceding embodiments, wherein at least two different parts of the object under test (50) consist of different layers.

S21. The measuring system according to any of the preceding system embodiments, wherein the processing system (20) is further configured to determine a transmission property of the target portion (55).

S22. The measuring system according to the preceding embodiment, wherein the processing system (20) is configured to determine the transmission property based on the measurement signal (40) and the received portion (45) of the measurement signal (40).

S23. The measuring system according to any of the 2 preceding embodiments, wherein the transmission property comprises a transmission coefficient of the target portion (55) and the processing system (20) is configured to determine the transmission coefficient.

S24. The measuring system according to any of the 3 preceding embodiments, wherein the transmission property of the target portion (55) is indicative of a ratio of

an amplitude of an electromagnetic wave after traversing through the target portion (55) over the amplitude of the electromagnetic wave before traversing through the target portion (55) and when it became incident on the target portion (55).

It will be understood that in a logarithmic scale, the above ratio can be represented as a difference.

S25. The measuring system according to any of the 4 preceding embodiments, wherein the transmission property of the target portion (55) is indicative of an attenuation caused by the target portion (55) to an electromagnetic wave traversing through the target portion (55).

S26. The measuring system according to any of the 5 preceding embodiments, wherein the transmission property of the target portion (55) is indicative of a phase shift caused by the target portion (55) to an electromagnetic wave traversing through the target portion (55).

S27. The measuring system according to any of the 6 preceding embodiments, wherein the transmission property is represented by a complex number.

S28. The measuring system according to any of the 7 preceding embodiments, wherein the processing system (20) is configured to determine the transmission property of the target portion (55) based on the amplitude of the measurement signal (40) as transmitted and on the amplitude of the received portion (45) of the measurement signal (40).

S29. The measuring system according to the preceding embodiment, wherein the amplitude of the measurement signal (40) as transmitted is predetermined.

S30. The measuring system according to any of the preceding system embodiments, wherein the processing system (20) is configured to obtain the thickness of the target portion (55).

S31. The measuring system according to the preceding embodiment, wherein the processing system (20) is configured to obtain a predetermined thickness of the target portion (55) to thereby obtain the thickness of the target portion (55).

S32. The measuring system according to any of the 2 preceding embodiments, wherein the processing system (20) is configured to obtain the thickness of the target portion (55) from a memory device (62) and wherein the memory device (62) is configured to store a predetermined thickness of the target portion (55).

S33. The measuring system according to the preceding embodiment, further comprising the memory device (62).

S34. The measuring system according to any of the 4 preceding embodiments, wherein the processing system (20) is configured to obtain the thickness of the target portion (55) from a user interface (64),

wherein the user interface (64) is configured to allow a user to input data indicative of the thickness of the target portion (55).

S35. The measuring system according to any of the 5 preceding embodiments, wherein the processing system (20) is configured to obtain data indicative of the thickness of the target portion (55) from a thickness measuring device (60).

S36. The measuring system according to the preceding embodiment, wherein the thickness measuring device (60) is configured to measure the thickness of the target portion (55) prior to providing the object under test (50) in the measurement region (30).

S37. The measuring system according to any of the 2 preceding embodiments, wherein the thickness measuring device (60) is configured to measure the thickness of the target portion (55) prior to providing the target portion (55) of the object under test (50) in the measurement region (30).

S38. The measuring system according to embodiment S35, wherein the thickness measuring device (60) is configured to measure the thickness of the target portion (55)

while the first antenna (10a) transmits the measurement signal (40) through the measurement region (30), while a target portion (55) of the object under test (50) is in the measurement region (30) and/or while the second antenna (10b) receives the received portion (45) of the measurement signal (40).

S39. The measuring system according to embodiment S35 or S38, wherein the thickness measuring device (60), the first antenna (10a) and the second antenna (10b) are configured to be activated simultaneously or at least quasi-simultaneously.

S40. The measuring system according to embodiment S35 or S38 or S39, wherein the processing system (20) is configured to trigger the thickness measuring device (60), the first antenna (10a) and the second antenna (10b) simultaneously or at least quasi-simultaneously.

S41. The measuring system according to any of the 6 preceding embodiments, wherein the thickness measuring device (60) is a non-contact thickness measuring device (60).

S42. The measuring system according to any of 7 preceding embodiments, wherein the thickness measuring device (60) comprises at least one sensor (65), each configured to measure a distance between itself and a respective distance sensor target.

S43. The measuring system according to the preceding embodiment, wherein each of the at least one sensor (65) is a displacement sensor (65).

S44. The measuring system according to any of the 2 preceding embodiments, wherein the system is configured to allow aligning the object under test (50) and the thickness measuring device (60), such that at least one of the at least one sensor (65) comprises its respective distance sensor target on the target portion (55) of the object under test.

S45. The measuring system according to any of the 3 preceding embodiments, wherein the thickness measuring device (60) is configured to determine a measured thickness based on at least one distance measured by the at least one sensor (65) and to output the measured thickness.

S46. The measuring system according to any of the 4 preceding embodiments, wherein the thickness measuring device (60) is configured to output at least one distance measured by the at least one sensor (65) and the processing system (20) is configured to determine the thickness of the target portion (55) based thereon.

S47. The measuring system according to any of the 5 preceding embodiments, wherein at least one of the at least one sensor (65) is an optical displacement sensor (65).

S48. The measuring system according to the preceding embodiment, wherein the optical displacement sensor (65) is configured to measure distance according to the confocal principle.

S49. The measuring system according to any of the 7 preceding embodiments, wherein the measuring system (1) is configured to allow providing the object under test (50) in a predetermined position in the measurement region (30) and all of the at least one sensor (65) face the same side of the object under test (50).

S50. The measuring system according to any of the 8 preceding embodiments, wherein the thickness measuring device (60) comprises at least a first and a second sensor (65) wherein

the first sensor (65) is positioned on the same side of the measurement region (30) as the first antenna (10a) and
the second sensor (65) is positioned on the same side of the measurement region (30) as the second antenna (10b).

S51. The measuring system according to the preceding embodiment, wherein the thickness measuring device (60) comprises a plurality of first sensors (65), all positioned on the same side of the measurement region (30) as the first antenna (10a).

S52. The measuring system according to any of the 2 preceding embodiments, wherein the thickness measuring device (60) comprises a plurality of second sensors (65), all positioned on the same side of the measurement region (30) as the second antenna (10b).

S53. The measuring system according to any of the preceding system embodiments, wherein

the second antenna (10b) is configured to transmit a reverse measurement signal (40') through the measurement region (30);
the first antenna (10a) is configured to receive a received portion (45') of the reverse measurement signal (40'); and
the processing system (20) is configured to determine at least one reverse property of the target portion (55) based on the received portion (45') of the reverse measurement signal (40') and the thickness of the target portion (55).

That is, in addition the measurement system can be configured to perform a reverse measurement of the object under test (50). For the reverse measurement, the features of embodiment S1 and its dependencies apply *mutatis mutandis.*

S54. The measuring system according to any of the preceding system embodiments, wherein the processing system (20) is configured to determine the at least one property of the target portion (55) further based on at least one reference.

S55. The measuring system according to the preceding embodiment, wherein the measuring system (1) is configured to perform a reference measurement to determine the at least one reference.

S56. The measuring system according to the preceding embodiment, wherein to perform the reference measurement

the first antenna (10a) is configured to transmit a reference measurement signal (40r) through the measurement region (30),
the second antenna (10b) is configured to receive a reference received portion (45r) of the reference measurement signal (40r) and
the processing system (20) is configured to determine the at least one reference based on the at least one reference received portion (45r) of the reference measurement signal (40r).

S57. The measuring system according to any of the 2 preceding embodiments, wherein the measuring system (1) is configured to perform the reference measurement with an empty measurement region (30) to thereby obtain at least one empty reference.

That is, there is no external element positioned in the measurement region (30). For example, the measurement region (30) can be a space filled with air.

S58. The measuring system according to the preceding embodiment, wherein the at least one empty reference comprises a path loss coefficient indicating an attenuation caused by the empty measurement region (30).

S59. The measuring system according to any of the 4 preceding embodiments, wherein the measuring system (1) is configured to perform the reference measurement with a reference sample (57) in the measurement region (30) to thereby obtain at least one sampled reference.

S60. The measuring system according to the preceding embodiment, wherein the reference sample (57) is a sample with known properties.

S61. The measuring system according to any of the 2 preceding embodiments, wherein the reference sample (57) comprises a reflective material, such as, a highly reflective material.

S62. The measuring system according to any of the 3 preceding, wherein the reference sample (57) is a metal plate.

S63. The measuring system according to any of the 4 preceding embodiments, wherein the at least one sampled reference comprises a reference attenuation indicating an attenuation caused by the measurement region (30) and the reference sample (57).

S64. The measuring system according to any of the preceding system embodiments and with the features of embodiments S57 and S59, wherein the measuring system (1) is configured to perform the reference measurement with an empty measurement region (30) and the reference measurement with the reference sample (57) in the measurement region (30).

S65. The measuring system according to any of the 11 preceding embodiments, wherein the processing system (20) is configured to determine the at least one property based on a comparison of the at least one received portion (45) of the measurement signal (40) with the at least one reference.

S66. The measuring system according to any of the 12 preceding embodiments, wherein the processing system (20) is configured to determine the at least one property based on a comparison of the at least one reference received portion (45r) with the at least one received portion (45).

S67. The measuring system according to any of the 13 preceding embodiments, wherein the processing system (20) is configured to determine the at least one property based on a comparison of the reference measurement signal (40r) with the measurement signal (40) if the reference measurement signal (40r) is different from the measurement signal (40).

It will be understood that a comparison can comprise at least one calculation.

S68. The measuring system according to any of the preceding system embodiments, wherein the measurement system is configured to allow providing the target portion (55) of the object under test (50) in the measurement region (30).

S69. The measuring system according to the preceding embodiment, wherein the measurement system is configured to allow providing the object under test (50) in a predetermined position in the measurement region (30).

S70. The measuring system according to any of the 2 preceding embodiments, further comprising a support structure in the measurement region (30) configured to support the object under test (50).

S71. The measuring system according to any of the preceding system embodiments, further comprising a positioning system configured to change a relative position between the object under test (50) and measuring system (1).

S72. The measuring system according to the preceding embodiment, wherein the positioning system is configured to move the measuring system (1) and/or the object under test (50), such that the target portion (55) of the object under test (50) is positioned in the measurement region (30).

S73. The measuring system according to any of the preceding system embodiments, wherein the measuring system (1) is configured to measure a plurality of target portions (55) of the object under test (50).

S74. The measuring system according to the preceding embodiment, wherein the plurality of target portions (55) are defined with a density of 5 to 10 target portions (55) per centimetre square, such as, 8 target portions (55) per centimetre square.

S75. The measuring system according to any of the 2 preceding embodiments, wherein the target portions (55) are uniformly distributed on at least a region of the object under test (50).

S76. The measuring system according to any of the 3 preceding embodiments, wherein each of the target portions (55) comprises an area between 50 to 500 millimetre square, preferably 130 to 150 millimetre square, such as, 140 millimetre square.

S77. The measuring system according to any of the 4 preceding embodiments and with the features of embodiment S71, wherein the positioning system is configured to perform a plurality of sub-motions to change the relative position between the object under test (50) and the measuring system (1).

S78. The measuring system according to the preceding embodiment, wherein the positioning system is configured to perform the plurality of sub-motions such that after each sub-motion a respective target portion (55) of the plurality of target portions (55) is positioned in the measurement region (30).

S79. The measuring system according to the preceding embodiment, wherein

the first antenna (10a) is configured to transmit, after each sub-motion, a measurement signal (40) through the measurement region (30) such that it traverses a respective target portion (55), the second antenna (10b) is configured to receive, after each sub-motion, a received portion (45) of the measurement signal (40) transmitted after the respective sub-motion, and

the processing system (20) is configured to determine for each target portion (55) of the plurality of target portions (55) at least one respective property based on the respective received portion (45) of the respective measurement signal (40) that traverses the target portion (55) and a respective thickness of the target portion (55).

S80. The measuring system according to the preceding embodiment, wherein the processing system (20) is configured to obtain, after each sub-motion, data indicative of the thickness of the respective target portion (55) from the thickness measuring device (60).

S81. The measuring system according to the preceding embodiment, wherein the thickness measuring device (60) is configured to measure, after each sub-motion, the thickness of the respective target portion (55).

S82. The measuring system according to the preceding embodiment and with the features of embodiment S7, wherein the processing system (20) is configured to determine the object property based on the at least one property of each target portion (55).

S83. The measuring system according to any of the preceding system embodiments, wherein the measuring system (1) comprises an output device (90) configured to output the at least one property of the target portion (55).

S84. The measuring system according to the preceding embodiment, wherein the output device (90) is configured to output the at least one property of the target portion (55) associated with data indicative of the position of the target portion (55) in the object under test (50).

S85. The measuring system according to any of the 2 preceding embodiments, wherein the output device (90) comprises at least one display.

S86. The measuring system according to any of the 3 preceding embodiments, wherein the output device (90) comprises at least one data transmission device configured to transmit data to a device external to the measuring system (1).

S87. The measuring system according to any of the preceding system embodiments, wherein the measuring system (1) comprises a clamp structure (70).

S88. The measuring system according to the preceding embodiment, wherein the clamp structure (70) comprises:

a first arm (72) configured for mounting therein or thereon the first antenna (10a) and a second arm (74) configured for mounting therein or thereon the second antenna (10b) and a base frame (75), wherein the first arm (72) and the second arm (74) protrude from the same side of the base frame (75).

S89. The measuring system according to the preceding embodiment, wherein the first antenna (10a) is provided in or on the first arm (72) and the second antenna (74) is provided in or on the second arm (74).

S90. The measuring system according to any of the 2 preceding embodiments, wherein the clamp structure (70) is formed as a single part - i.e., without mounting or assembling or attaching smaller parts together.

S91. The measuring system according to any of the 3 preceding embodiments and with the features of embodiment S42, wherein at least one of the at least one sensor (65) is provided in or on the first arm (72).

S92. The measuring system according to any of the 4 preceding embodiments and with the features of embodiment S42, wherein at least one of the at least one sensor (65) is provided in or on the second arm (74).

S93. The measuring system according to any of the 5 preceding embodiments and with the features of embodiment S50, wherein the first sensor (65) is provided in or on the first arm (72) and the second sensor (65) is provided in or on the second arm (74).

S94. The measuring system according to any of the preceding system embodiments and with the features of embodiment S71, wherein the positioning system comprises a positioning apparatus (85), said positioning apparatus (85) configured to move the first antenna (10a) and the second antenna (10b).

S95. The measuring system according to the preceding embodiment, wherein the positioning apparatus (85) is a robotic arm.

S96. The measuring system according to any of the 2 preceding embodiments and with the features of embodiment S87, wherein the clamp structure (70) and the positioning apparatus (85) are configured to be physically connected to each other and the positioning apparatus (85) is configured to move the clamp structure (70).

S97. The measuring system according to the preceding embodiment, wherein the physical connection between the clamp structure (70) and the positioning apparatus (85) is configured to allow rotation of the clamp structure (70).

S98. The measuring system according to any of the preceding system embodiments and with the features of embodiment S71, wherein the positioning system comprises a handling apparatus (87) configured to move the object under test (50).

S99. The measuring system according to any of the preceding system embodiments, wherein the system can comprise at least one reflector in the measurement region (30). S100. The measuring system according to the preceding embodiment, wherein the at least one reflector is positioned inclined, with an inclination angle between 30° to 80° or between 100° to 150° relative to the direction of travel of the measurement signal (40).

S101. The measuring system according to any of the preceding system embodiments, wherein the target portion (55) comprises a first surface facing the first antenna (10a) and a second surface facing the second antenna (10b).

S102. The measuring system according to the preceding embodiment, wherein the first antenna (10a) is configured to transmit the measurement signal (40) such that it is incident on the first surface and it exits the target portion (55) through the second surface.

S103. The measuring system according to any of the 2 preceding embodiments and with the features of embodiment S53, wherein the second antenna (10b) is configured to transmit the reverse measurement signal (40') such that it is incident on the second surface and it exits the target portion (55) through the first surface.

S104. The measuring system according to any of the 3 preceding embodiments, wherein the thickness of the target portion (55) indicates a Euclidean distance between the first surface and the second surface.

S105. The measuring system according to any of the preceding system embodiments, wherein the thickness of the target portion (55) indicates a minimum traversable distance inside the target portion (55) by an electromagnetic wave being perpendicularly incident on a surface of the target portion (55).

S106. The measuring system according to any of the preceding system embodiments, wherein the thickness of the target portion (55) is measured along a direction of motion of the measurement signal (40).

It will be understood that the definitions of the thickness of the target portion (55) provided in embodiments S104 to S106 are generally equivalent.

S107. The measuring system according to any of the preceding system embodiments, wherein the measurement signal (40) is an electromagnetic wave.

S108. The measuring system according to any of the preceding system embodiments, wherein the first antenna (10a) is configured to transmit electromagnetic waves with a frequency in the microwave frequency range.

S109. The measuring system according to any of the preceding system embodiments, wherein the first antenna (10a) is configured to transmit electromagnetic waves with a frequency between 20 GHz to 160 GHz, preferably between 70 GHz to 90 GHz.

S110. The measuring system according to any of the preceding system embodiments, wherein the second antenna (10b) is configured to receive electromagnetic waves with a frequency between 20 GHz to 160 GHz, preferably between 70 GHz to 90 GHz.

S111. The measuring system according to any of the preceding system embodiments, wherein the measurement signal (40) is a modulated measurement signal (40).

S112. The measuring system according to the preceding embodiment, wherein the processing system (20) is configured to perform signal modulation to thereby generate the modulated measurement signal (40).

S113. The measuring system according to any of the preceding system embodiments, wherein the first antenna (10a) and the second antenna (10b) are aligned such that a main lobe of the first antenna (10a) and a main lobe of the second antenna (10b) intersect.

S114. The measuring system according to any of the preceding system embodiments, wherein a distance between the first antenna (10a) and the second antenna (10b) is at least 5 cm and at most 100 cm, preferably at least 15 cm and at most 30 cm, such as, 20 cm.

S115. The measuring system according to any of the preceding system embodiments, wherein the first antenna (10a) and the second antenna (10b) are configured as transceiver antennas.

S116. The measuring system according to any of the preceding system embodiments, wherein the measuring system (1) comprises 1 to 100 first antennas (10a) and 1 to 100 second antennas.

S117. The measuring system according to the preceding embodiment, wherein the measuring system (1) comprises a plurality of first antennas (10a) and for each first antenna (10a) a respective second antenna (10b).

S118. The measuring system according to any of the preceding system embodiments and with the features of embodiment S71, wherein the processing system (20) is configured to control the positioning system.

S119. The measuring system according to any of the preceding system embodiments, wherein the processing system (20) is configured to control the first antenna (10a) and the second antenna (10b).

S120. The measuring system according to any of the preceding system embodiments, wherein the measuring system (1) is configured to carry out the method according to any of the preceding method embodiments.

S121. The measuring system according to any of the preceding system embodiments, the processing system (20) is configured to generate a measured data set based on the received portion (45) of the measurement signal (40).

S122. The measuring system according to the preceding embodiment, wherein the measured data set comprises a measured amplitude of the received portion (45) of the measurement signal (40).

S123. The measuring system according to any of the 2 preceding embodiments, wherein the measured data set comprises a measured phase of the received portion (45) of the measurement signal (40).

S124. The measuring system according to any of the 3 preceding embodiments, wherein the measured data set comprises a measured amplitude and a measured phase of the received portion (45) of the measurement signal (40).

S125. The measuring system according to any of the preceding system embodiments, wherein the processing system is configured to utilize a set of N parameters corresponding to the object under test (50) to determine the at least one property of the target portion (55). S126. The measuring system according to the preceding embodiment, wherein N is a natural number greater than or equal to 3.

S127. The measuring system according to any of the 2 preceding embodiments, wherein the object under test (50) comprises at least one layer, and wherein the set of N parameters comprise for each of the at least one layer

a respective first layer-permittivity parameter,
a respective second layer-permittivity parameter, and
a respective layer thickness parameter,
wherein the first and second layer-permittivity parameters are indicative of a complex permittivity of the respective layer.

S128. The measuring system according to any of the 3 preceding embodiments, wherein the processing system (20) is configured to

receive at least N-3 of the N parameters and determine the remaining parameters of the N parameters.

S129. The measuring system according to the preceding embodiment, wherein the processing system (20) is configured to receive N-3 parameters of the N parameters.

S130. The measuring system according to any of the 2 preceding embodiments, the at least N-3 of the N parameters are predetermined parameters.

S131. The measuring system according to the preceding embodiment, at least one of the at least N-3 parameters is predetermined based on a prior measurement.

S132. The measuring system according to any of the 2 preceding embodiments, wherein at least one of the at least N-3 parameters is predetermined based on an assumption.

S133. The measuring system according to any of the 5 preceding embodiments, wherein the processing system (20) is configured to determine the remaining parameters of the N parameters by utilizing for at least one of the remaining parameters at least one corresponding constraint.

S134. The measuring system according to the preceding embodiment, wherein the processing system (20) is configured to receive the at least one constraint.

S135. The measuring system according to any of the 2 preceding embodiments, wherein the at least one constraint is indicative of a range of values and wherein the remaining parameter to which said at least one constraint corresponds to, comprises a value within the range of values indicated by said at least one constraint.

S136. The measuring system according to any of the 8 preceding embodiments, wherein the processing system (20) is configured to execute a numerical analysis algorithm to determine the remaining parameters of the N parameters.

S137. The measuring system according to the preceding embodiment, wherein the numerical analysis algorithm is an iterative algorithm.

S138. The measuring system according to the preceding embodiment and with the features of embodiment S121, wherein in each iteration of the numerical analysis algorithm the processing system (20) is configured to

set a respective value to each of the remaining parameters,
calculate based on the N parameters an analytical data set and
calculate an error corresponding to the set values based on a comparison of the analytical data set with the measured data set.

S139. The measuring system according to the preceding embodiment and with the features of embodiment S133, wherein the processing system (20) is configured to set a respective value to each of the remaining parameters such that the set values are in conformity with the at least one constraint.

S140. The measuring system according to any of the 2 preceding embodiments and with the features of embodiment S122, wherein the analytical data set comprises an analytical amplitude of the of the received portion (45) of the measurement signal (40).

S141. The measuring system according to any of the 3 preceding embodiments and with the features of embodiment S123, wherein the analytical data set comprises an analytical phase of the of the received portion (45) of the measurement signal (40).

S142. The measuring system according to any of the 4 preceding embodiments and with the features of embodiment S124, wherein the analytical data set comprises an analytical amplitude and an analytical phase of the of the received portion (45) of the measurement signal (40).

S143. The measuring system according to any of the 5 preceding embodiments and with the features of embodiment S125, wherein the analytical data set comprises an analytical thickness of the target portion (55).

S144. The measuring system according to any of the 6 preceding embodiments, wherein the numerical analysis algorithm is configured to output the values of the remaining parameters that yield the minimum error.

S145. The measuring system according to the preceding embodiment, wherein the at least one property of the target portion is determined based on the output of the numerical analysis algorithm.

S146. The measuring system according to any of the preceding system embodiments and with the features of embodiment S125, wherein determining at least one property of the target portion (55) based on the received portion (45) of the measurement signal (40) and a thickness of the target portion (55) comprises determining a reflection coefficient of the target portion (55) of the object under test (50) based on the set of N parameters.

S147. The measuring system according to any of the preceding system embodiments and with the features of embodiment S125, wherein the processing system is configured to determine an effective permittivity of the target portion (55) of the object under test (50) based on the set of N parameters.

Below further method embodiments are discussed.

M116. The method according to any of the preceding method embodiments, wherein the measuring system (1) is configured according to any of the preceding system embodiments. Below, use embodiments will be discussed. These embodiments are abbreviated by the letter "U" followed by a number. Whenever reference is herein made to "use embodiments", these embodiments are meant.

U1. Use of the system according to any of the preceding system embodiments and/or of the method according to any of the preceding method embodiments to measure the effects of a radar cover on electromagnetic waves traversing through the radar cover and wherein the radar cover is intended for covering at least one radar.

U2. Use of the system according to any of the preceding system embodiments and/or of the method according to any of the preceding method embodiments to measure the effects of a radar cover on electromagnetic waves traversing through the radar cover and wherein the radar cover is intended for covering at least one radar used in a vehicle.

U3. Use of the system according to any of the preceding system embodiments and/or of the method according to any of the preceding method embodiments during the production of a radar cover.

U4. Use of the system according to any of the preceding system embodiments and/or of the method according to any of the preceding method embodiments during the production or assembly of a system comprising the radar cover, such as, during the assembly of a vehicle comprising the radar cover.

Brief description of the drawings

Fig. 1     depicts a block diagram of a measuring system according to an embodiment of the present invention;

Fig. 2     depicts a schematic of the measuring system comprising a clamp structure;

Fig. 3     depicts a schematic of the measuring system in a setup for performing a reference measurement with an empty measurement region;

| Fig. 4 | depicts a schematic of the measuring system in a setup for performing a reference measurement with a sample in the measurement region; |
|---|---|
| Fig. 5 | depicts a schematic of the measuring system comprising a positioning apparatus; |
| Fig. 6 | depicts a schematic of the measuring system comprising a handling apparatus; |
| Fig. 7a, 7b | illustrates a target portion and a target region of an object under test; |
| Fig. 8 | illustrates a method according to an embodiment of the present invention to determine at least one property of a target portion; |
| Fig. 9 | illustrates an iterative method according to an embodiment of the present invention to determine at least one property for each of a plurality of target portions. |

**Detailed description of the drawings**

Throughout the description of the drawings, like features are denoted by like reference numerals. However, for ease of illustration and brevity of the description, some reference numerals may be omitted in some of the Figures.

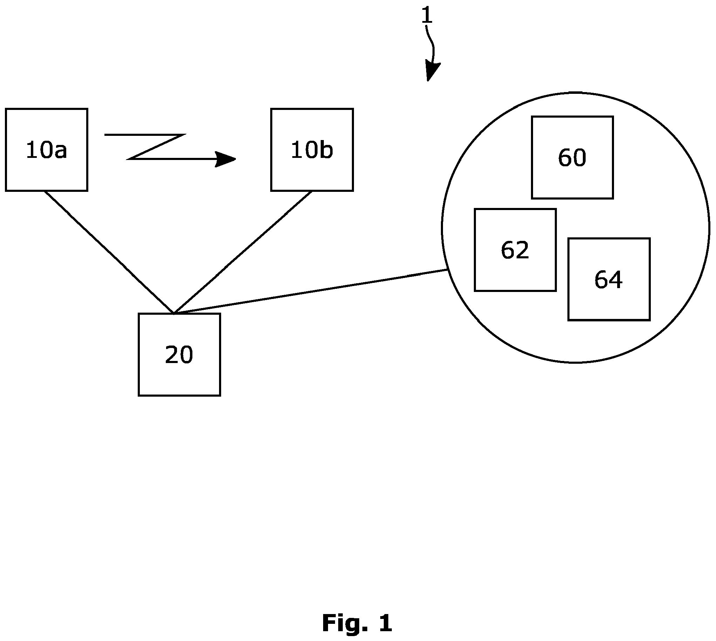

Fig. 1 depicts a block diagram of a measuring system 1 according to an embodiment of the present invention. The measuring system 1 can comprise a first antenna 10a and a second antenna 10b. The first antenna 10a can be configured to transmit (i.e., emit) an electromagnetic signal and the second antenna 10b can be configured to receive an electromagnetic signal. In some embodiments, the first antenna 10a and the second antenna 10b can be transceiver antennas. Moreover, the first antenna 10a and the second antenna 10b can be configured to transmit and/or to receive microwaves. More particularly, the first antenna 10a and the second antenna 10b can be configured to transmit and/or to receive electromagnetic signals with a frequency of at least 20 GHz and at most 160 GHz, preferably at least 70 GHz and at most 90 GHz. It will be understood, that for the sake of brevity the first antenna 10a and the second antenna 10b can be jointly referred to as antennas 10a, 10b.

The measuring system can further comprise a processing system 20. The processing system 20 may comprise one or more processing units configured to carry out computer instructions of a program (i.e., machine readable and executable instructions). The processing unit(s) can be singular or plural. For example, the processing system 20 may comprise at least one of central processing unit (CPU), graphical processing unit (processing unit) GPU, digital signal processor (DSP), accelerated processing unit (APU), application specific integrated circuit (ASIC), application specific instruction set processor (ASIP), field programmable gate array (FPGA), artificial intelligence (AI) accelerator and tensor core, each of which can be in the singular or plural.

In some embodiments, the processing system 20 can be locally provided with the first antenna 10a and the second antenna 10b, i.e., the processing system and the antennas 10a, 10b are provided in proximity to each other. For example, the processing system 20 can be a system-on-chip, computer, PC, laptop, workstation, tablet or smartphone. Alternatively, the processing system 20 can be provided remotely from the antennas 10a, 10b. For example, the processing system 20 can be a remote server or a cloud-computing system. Alternatively still, the processing system 20 can be partly provided locally to the antennas 10a, 10b and partly remotely from the antennas 10a, 10b. That is, the processing system can comprise a local part (not shown) and a remote part (not shown) configured to exchange data electronically between each-other. The local part can be provided with limited computational resources, therefore resulting in a smaller, simples and less costly measuring system. Simple computations can be performed locally by the local part of the processing system 20, while more complex computations can be performed remotely on by the remote part of the processing system 20. The remote part of the processing system can be configured to provide software updates to the local part of the processing system 20.

The processing system 20 can be configured to control the other components of the measuring system 1. For example, the processing system 20 can be configured to receive instructions from a user and/or to execute instructions of a software, to thereby control the other components of the measuring system 1. Controlling the other components of the measuring system 1 can comprise configuring each component in a certain component state. Controlling the other components of the measuring system 1 can comprise triggering, activating, deactivating, hibernating, sending data to, receiving data from, sending instructions to and/or receiving instructions from the component.

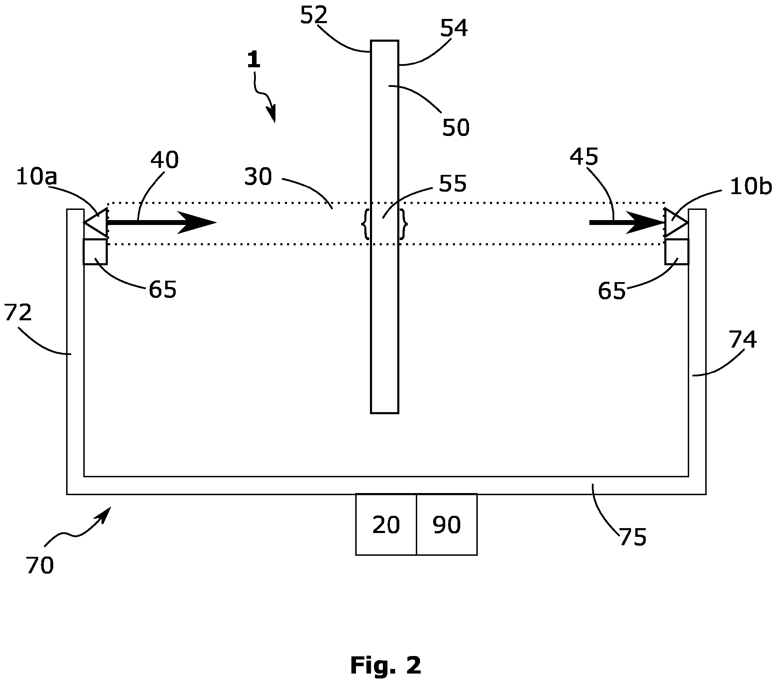

The processing system 20 can thus be configured to trigger the first antenna 10a to transmit an electromagnetic signal, e.g., the measuring signal 40 (see Fig. 2). It can also be configured to trigger the second antenna 10b to listen for electromagnetic signals. The processing system 20 can receive from the second antenna 10b the electromagnetic signals that the second antenna 10b receives. It will be understood, that the processing system 20 can receive data indicative of the electromagnetic signals that the second antenna 10b receives. Said data can for example be samples of the received electromagnetic signals.

As will be discussed in more detail in Fig. 2, the processing system can be configured to determine at least one property of a target portion 55 of ab object under test 50, based on a received portion 45 of a measurement signal 40 and a thickness of a target portion 55.

In some embodiments, the thickness of the target portion 55 can be predetermined. It can be stored on a memory device 62. The processing system 20 can be configured to access the memory device 62 to thereby obtain the thickness. The measuring system 1 can comprise the memory device 62. Alternatively or additionally, a user interface 64 can be utilized allowing a user to input the thickness. The processing system 20 can be configured to receive data from the user interface 64 to thereby obtain the thickness. The measuring system 1 can comprise the user interface 64.

In some embodiments, the thickness of the target portion 55 can be determined or measured. In such embodiments, a thickness measuring device 60 can be utilized. The thickness measuring device 60 can be configured to measure a thickness of a target. The thickness measuring device 60 can further be configured to output the thickness of the target and/or data indicative of the thickness of the target. The processing system 20 can be configured to receive the thickness of the target and/or data indicative of the thickness of the target from the thickness measuring device 60. The measuring system can comprise the thickness measuring device 60.

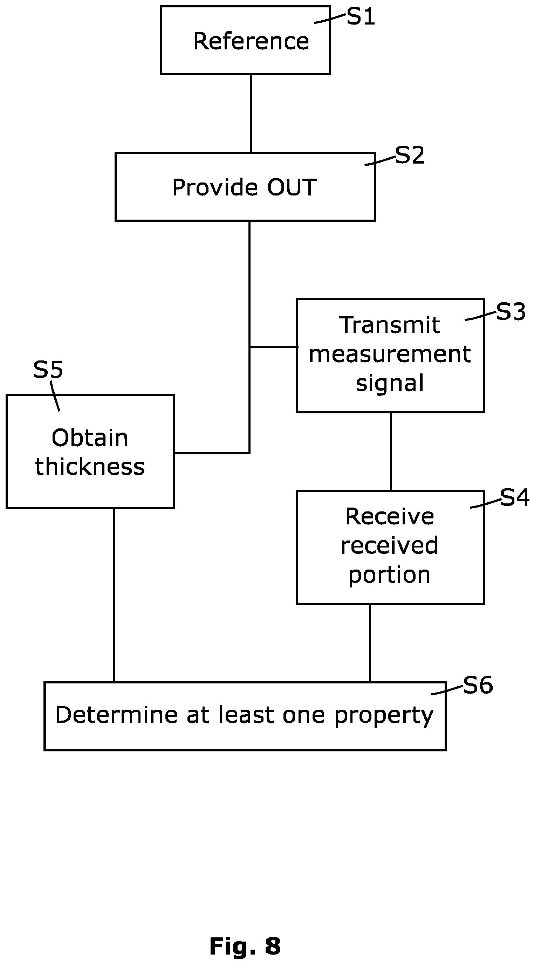

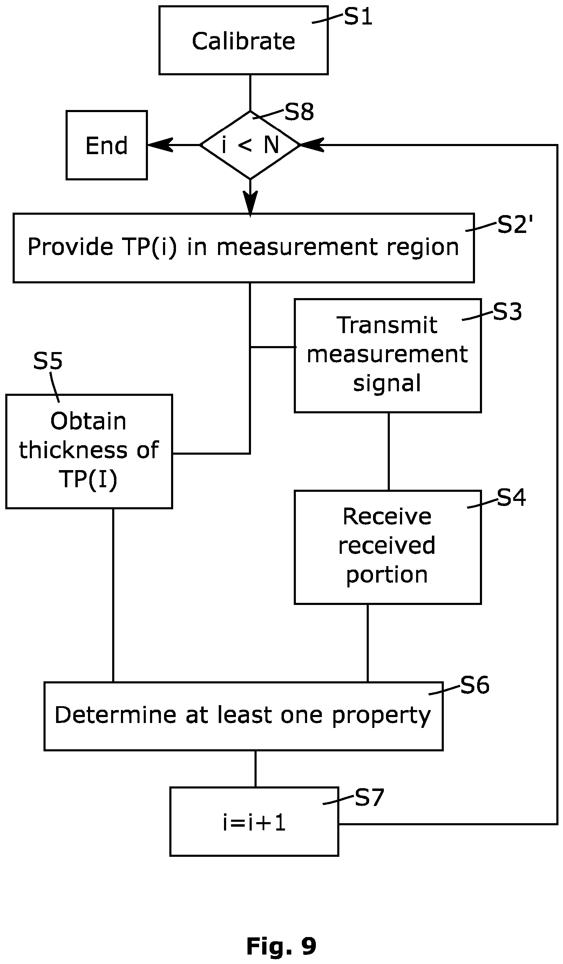

Fig. 2 depicts a schematic of a measuring system 1 comprising a clamp structure 70 according to an embodiment of the present invention. The measuring system 1 can be configured for measuring an object under test 50. More particularly, the measuring system 1 can be configured for carrying out the method discussed with reference to Figs. 8 and 9.

The measuring system 1 can comprise a first antenna 10a (which can be in the singular or plural) and a second antenna 10b (which be in the singular or plural). The first antenna 10a and the second antenna 10b can be configured to face each other on opposite sides of a measurement region 30, such that a measurement signal 40 transmitted by the first antenna 10a can be received by the second antenna 10b. In particular, the second antenna 10b can receive a received portion 45 of the measurement signal 40.

The first antenna 10a and the second antenna 10b can define the measurement region 30. The measurement region 30 can generally extend along the line of sight of the antennas 10a, 10b relative to each other.

An object under test 50 (i.e., an object to be measured) can be provided in the measurement region 30. In some embodiments, the object under test 50 can be an object to be measured, a part of an object to be measured or a sample taken from an object to be measured. The electromagnetic waves emitted by the first antenna 10a, can contact the object under test 50, in particular a target portion 55 of the object under test 50. Part of the emitted waves can traverse through the object under test 50 and can be received by the second antenna 10b. The part received by the second antenna 10b can be referred to as the received portion 45. Further, the object under test 50 can be provided in the measurement region 30 substantially perpendicular to the boresight of the antennas 10a and 10b.

The first antenna 10a can be configured to emit or radiate electromagnetic waves with a certain frequency, such as, at least 20 GHz and at most 160 GHz, preferably at least 70 GHz and at most 90 GHz. For example, the first antenna 10a can be configured to emit electromagnetic waves in the 77 GHz band (i.e., 76-77 GHz) and/or electromagnetic waves in the 79 GHz band (i.e., 77-81 GHz). Moreover, the first antenna 10a can be configured to emit electromagnetic waves towards the object under test 50 and more particularly towards the first side 52 of the object under test 50. That is, the main lobe of the first antenna 10a can be directed towards the first side 52 of the object under test 50. The first antenna 10a can be configured to transmit electromagnetic waves with a power of at least 1 microwatt (i.e., - 30dBm) and at most 1 watt (i.e., 30 dBm).

Preferably, the first antenna 10a can be similar to the transmitting antenna of a radar to be covered by the object under test 50. For example, the at least one first antenna 10a can emit electromagnetic waves with the same frequency as the antenna of the radar and/or can comprise the same or similar polarization and/or field of view size and shape with the antenna of the radar. For example, the first antenna 10a can comprise the same or similar antenna pattern with the antenna of the radar.

The second antenna 10b can be configured to face a second side 54 of the object under test 50, wherein the second side 54 is opposite to the first side 52. The second antenna 10b can be configured to receive electromagnetic waves with a certain frequency, such as, at least 20 GHz and at most 160 GHz, preferably at least 70 GHz and at most 90 GHz. For example, the second antenna 10b can be configured to receive electromagnetic waves in the 77 GHz band (i.e., 76-77 GHz) and/or electromagnetic waves in the 79 GHz band (i.e., 77-81 GHz). The second antenna 10b can be arranged such that the main lobe of the second antenna 10b is directed towards the second side 54 of the object under test 50.

In some embodiments, the first antenna 10a and the second antenna 10b ca be horn antennas. The horn antennas 10a, 10b can be advantageous due to their substantial directivity which can facilitate directing the emitted electromagnetic waves toward a preferred direction, such as, towards the object under test 50 in a substantially perpendicular angle with the surface of the object under test 50. Further, a horn antenna can also be advantageous as it can allow a gradual transition structure, realizing impedance matching with open air hence allowing for efficient emission/reception of the electromagnetic waves.

Furthermore, horn antennas can emit linearly polarized electromagnetic waves. It can be advantageous to match the polarization of the first antenna 10a and second antenna 10b with the polarization of the radar to be covered by the object under test 50 (e.g., if the object under test is a radome). This can allow for more accurate results to be obtained based on the rationale that the more similar the test conditions are to the real conditions the more accurate results can be obtained.

In some embodiments, the first antenna 10a

and the second antenna 10b are identical.

Moreover, the first antenna 10a can be aligned with the second antenna 10b. That is, the first antenna 10a and the second antenna 10b can be provided such that the main lobe of the first antenna 10a and the main lobe of the second antenna 10b can intersect with each-other.

In some embodiments, the measuring system 1 can comprise a plurality of first antennas 10a and a plurality of second antennas 10b. For each first antenna 10a there can be at least one second antenna 10b that can receive the electromagnetic waves emitted by the first antenna 10a. Alternatively or additionally, each second antenna 10b can receive electromagnetic waves transmitted by at least one first antenna 10a. In other words, the antennas 10a, 10b can be configured according to any of the following arrangements: single-input and single output (SISO), single input and multiple output (SIMO), multiple input and single output (MISO) and multiple-input and multiple output (MIMO). Each of the arrangements can be associated with a trade-off between complexity of the system, amount of data generated (simultaneously), total time for measuring the object under test 50 and/or the area of the object under test 50 measured per unit time.

As discussed, the measuring system 1 can comprise a processing system 20. The processing system 20 can be connected with the first antenna 10a by a first antenna connector (not shown) and with the second antenna 10b by a second antenna connector (not shown). The first antenna connector and the second antenna connector can comprise respective electrical conductors, such as, wires - e.g., coaxial cables. In such embodiments, the processing system 20 can be configured to trigger the antenna 10a by sending an electrical signal through the respective conductor and the first antenna 10a can be configured to convert the electrical signals into electromagnetic radiation. The second antenna 10b can be configured to convert electromagnetic radiation into electrical signals and to transmit the electrical signals to the processing system 20 through the respective conductor.

In another embodiment, the first antenna connector and the second antenna connector can comprise waveguides. In such embodiments, the processing system 20 can be configured to trigger the first antenna 10a by generating electromagnetic waves and transmitting those through the respective waveguide to the first antenna 10a. The first antenna 10a can be configured to provide an interface between the respective waveguide and open-air for an efficient transmission of the waves. The second antenna 10b can be configured to receive electromagnetic radiation and to transmit it through the respective waveguide to the processing system 20.

The processing system 20 can trigger the first antenna 10a to emit an electromagnetic wave with a certain pattern in time and frequency. For example, the processing system 20 can trigger the first antenna 10a to emit pulses of electromagnetic waves with a certain bandwidth centred around a certain frequency. As it can be understood, the processing system 20 can trigger the first antenna 10a to emit electromagnetic waves within the range of frequencies and bandwidths supported by the first antenna 10a (i.e., based on the geometry or physical structure of the first antenna 10a a certain range of frequencies can be transmitted efficiently). The processing system 20 can trigger the first antenna 10a to transmit single tones, wherein each tone is transmitted at a time and with a frequency within a certain frequency range. Alternatively, when multiple measurements can be performed simultaneously (e.g., multiple first and second antennas are provided) the processing system 20 can trigger each first antenna to transmit a unique tone. Thus, multiple tones can be transmitted at a time. Alternatively, the processing system 20 can trigger the first antenna 10a to transmit a modulated signal (i.e., a composed signal of multiple single tones) - which can allow multiple tones to be transmitted simultaneously.

In some embodiments, the received signal can be provided to the processing system 20 in the same frequency range as transmitted from the first antenna 10a and received by the second antenna 10b, i.e., the RF signal is directly distributed to the processing system 20.

In another embodiment, at least one frequency converter can be used. More particularly, an up-converter can be used between the processing system 20 and the first antenna 10a and a down-converter can be used between the second antenna 10b and the processing system 20.

Thus, the processing system 20 can operate at an intermediate frequency IF (e.g., 1 - 6 GHz) or at baseband (0 - 3 GHz), while the antennas 10 can transmit and/or receive RF signal at higher frequencies (i.e., RF range, e.g., 20 - 160 GHz). This can be advantageous as the processing system 20 can be configured to operate at a certain low frequency range (e.g., IF range or baseband) independent of the RF range of the signals transmitted between the first antenna 10a and second antenna 10b.

The measuring system 1 can further comprise a clamp structure 70. The clamp structure 70 can comprise a base frame 75, a first arm 72 and a second arm 74, wherein the first arms 72 and the second arm 74 protrude from the same side of the base frame 75. In some embodiments, the first arm 72 and the second arm 74 can protrude from respective ends of the base frame 75. Hence, the first arm 72, the second arm 74 and the base frame 75 can create a U-shaped structure or a "clamp" shaped structure.

In some embodiments, the clamp structure 70 can be manufactured by attaching or fixing the first arm 72 and the second arm 74 on two opposing ends of the base frame 75. In some other embodiments, the clamp structure 70 can be manufactured as a single part - i.e., without mounting or assembling or attaching smaller parts together to form the clamp structure 70.

The clamp structure 70 can provide a stable structure for the antennas 10a, 10b to be mounted. It can be advantageous to have the first antenna 10a and the second antenna 10b aligned with each-other such that most of the radiated electromagnetic waves emitted by the first antenna 10a can be received by the second antenna 10b. The shape of the clamp structure 70 can facilitate such an alignment. Further, it can be advantageous to keep the distance between the two antennas 10 constant, at least during a measurement. The clamp structure 70, more particularly the base frame 75, can facilitate keeping the distance between the first antenna 10a and second antenna 10b constant.

The clamp structure 70 can further facilitate the handling of the first antenna 10a and the second antenna 10b, without changing the relative position between the first antenna 10a and the second antenna 10b.

The clamp structure 70 can also comprise the first antenna connector (not shown) and the second antenna connector (not shown), which can be provided hidden inside the clamp structure 70.

The measuring system 1 can further comprise at least one displacement sensor 65. The at least one displacement sensor 65 can be part of a thickness measuring device 60. Each displacement sensor 65 can be configured to measure a distance between itself and a target. In some embodiments, the displacement sensor 65 can be a laser-based sensor 65. In such embodiments, the displacement sensor can be configured to emit light, such that it is incident on the target portion 55. Fig. 2 depicts an embodiment wherein the thickness measuring device 60 comprises two displacement sensors 65, each mounted on a respective arm 72, 74 of the clamp structure 70. In such embodiments, the thickness measuring device 60 can be configured to determine thickness if the target portion 55 based on a two-sided measurement. However, it will be understood that the thickness measuring device 60 may also be configured to determine thickness of the target portion 55 based on a one-sided measurement. In such embodiments, the thickness measuring device 60 can comprise one displacement sensor 65 or it can comprise multiple displacement sensors 65 all provided on facing the same side of the target portion 55.

The measuring system 1 can further comprise an output device 90 that can be configured to output the at least one property of the target portion 55.

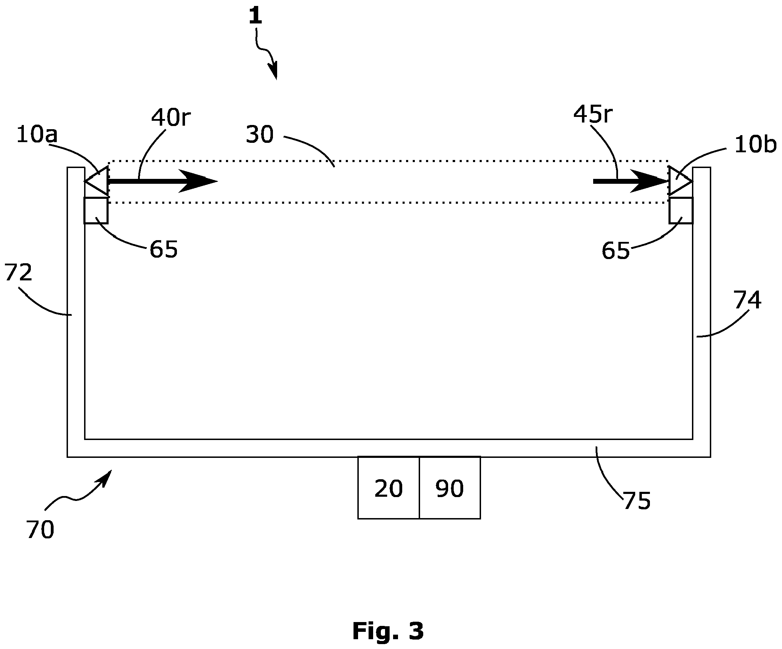

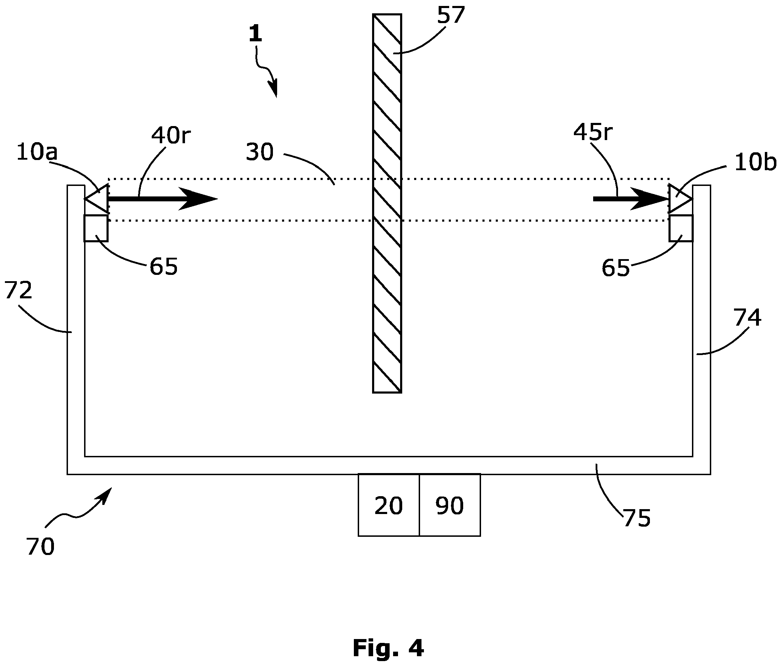

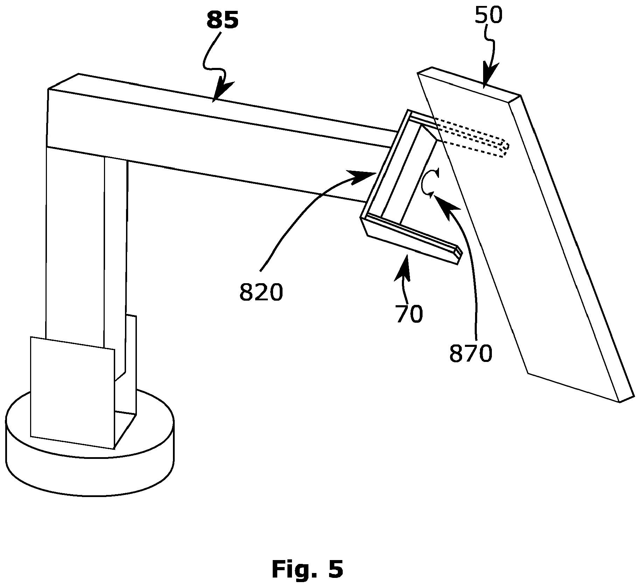

Fig. 3 and Fig. 4 depict the measuring system 1 configured to perform a reference measurement to obtain at least one reference. In Fig. 4, the system is illustrated in a setup for performing a reference measurement with an empty measurement region 30, therefore obtaining at least one empty reference. In Fig. 5, the system is illustrated performing a reference measurement with a reference sample 57 with known properties placed in the measurement region 30, therefore obtaining at least one sampled reference.

The principle of performing the reference measurement can be similar to the one for performing a measurement illustrated in Fig. 2. At least one of the antennas 10a, 10b can be configured to emit a reference measurement signal 40r. Figs. 4 and 5 illustrate the case when the first antenna 10a transmits the reference measurement signal 40r. The reference measurement signal 40r can comprise similar or identical properties with the measurement signal 40. For example, the reference measurement signal 40r can comprise the same frequency with the measurement signal 40.

The other antenna 10a, 10b can be configured to receive a reference received portion 45r of the reference measurement signal 40r. Figs. 4 and 5 illustrate the case when the second antenna 10b receives the reference received portion 45r. In Fig. 4, the reference measurement signal 40r traverses only through the measurement region 30, while in Fig. 5 the reference measurement signal 40r traverses through the measurement region 30 and the reference sample 57 provided therein.

The at least one reference can comprise data indicating a path loss (e.g., a path loss exponent) corresponding to the space between the antennas 10a, 10b, i.e., to the measurement region 30. For example, the path loss that can be caused by the (empty) space (i.e., air) of the measurement region can be obtained by performing a reference measurement with an empty measurement region 30, as illustrated in Fig. 3. More particularly, during the reference measurement with an empty measurement region 30, a reference measurement signal 40r can be emitted by the first antenna 10a and can be received by the second antenna 10b. The reference measurement signal can traverse though the measurement region 30, before being received by the second antenna 10b. The amplitude and/or power of the received portion 45r of the reference measurement signal 40r can be compared with the amplitude and/or power of the reference measurement signal 40r as emitted by the first antenna 10a. The comparison can be performed by the processing system 20. Based thereon, the attenuation and/or any other change to the measurement signal 40r that can be caused by the measurement region 30 itself can be determined. This can be compensated when measuring an object under test 50.

In a similar manner, the measuring system 1 can be calibrated using a reference sample 57 as illustrated in Fig. 4.

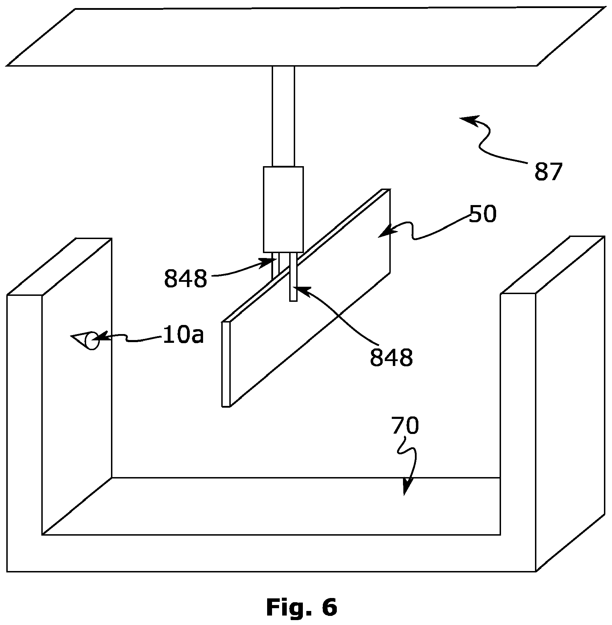

In some embodiments the measuring system 1 can further comprise a positioning system which can be configured to change the relative position between the measuring system 1 and the object under test 50. The positioning system can be configured to either move the measuring system 1 by utilizing a positioning apparatus 85 or to move the object under test 50 by utilizing handling apparatus 87 or both. This is illustrated in Figs. 5 and 6.

Fig. 5 illustrates a positioning apparatus 85. The positioning apparatus 85 can be a robotic arm 85. The clamp structure 70 can be mounted on the positioning apparatus 85. As illustrated by the arrow 870, the joint 820 between the clamp structure 70 and the positioning apparatus 85 can allow rotational motion of the clamp structure 70. As such, the clamp structure 70 can be advantageously oriented with respect to the object under test 50, e.g., such that the measurement signal 40 can be perpendicularly incident on the surface of the object under test 50. Moreover, the joint 820 can be configured for releasably attaching the clamp structure 70 to the positioning apparatus 85. This can allow for easy replacement of the clamp structure 70. The positioning apparatus 85 can be configured to generate translational and/or rotational motion of the clamp structure 70.

Fig. 6 illustrates a handling apparatus 87. The handling apparatus 87 can be a robotic arm 87. In some embodiments, the handling apparatus 87 can be part of an assembly line conveyor. The handling apparatus 87 can be configured to grab an object under test 50, e.g., by utilizing grippers 848. The handling apparatus 87 can be configured to generate translational and/or rotational motion of the clamp structure 70.

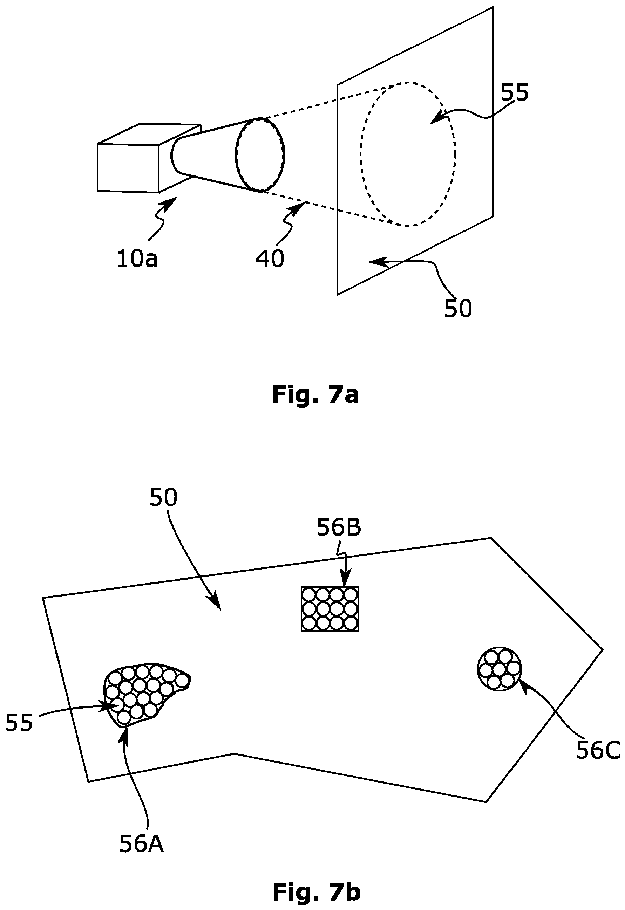

Fig. 7a illustrate a target portion 55 of an object under test 50. Further, Fig. 7a depicts the first antenna 10a transmitting the measurement signal 40. The measurement signal 40 is depicted with dotted lines which represent the volume wherein most of the electromagnetic energy radiated by the first antenna 10a can be concentrated. This may correspond to the main lobe of the first antenna 10a. In Fig. 7a, the measurement signal 40 is depicted with a truncated-cone shape. In general, the shape of the measurement signal 40 can depend on the shape, structure, type of antenna 10T and/or on the operational frequency band of the first antenna 10a.

The target portion 55 can be defined by the intersection of the measurement signal 40 with the object under test 50. The target portion 55 can also be defined as the part of the object under test 50 that can be traversed by the measurement signal 40.

Fig. 7b illustrates at least one target region 56 of the object under test 50. The target region 56 can comprise a part of the object under test 50 that need to be measured. In some embodiments, the target region 56 can include the entire object under test 50. In some embodiments, multiple target regions 56 of an object under test 50 can be defined. As depicted in Fig. 7b, 3 target regions 56A, 56B and 56C are required to be measured. The target regions 56 can comprise regular shapes, such as, rectangular (e.g., target region 56B), triangular, elliptic (e.g., target region 56C), hexagonal, octagonal, etc. In general, the target regions 56 can comprise any shape, e.g., the irregular shape of the target region 56A.

The target region 56 can be measured by "scanning" it, using any of the measuring systems and methods. The target region 56 can be measured by measuring at least one target portion 55 that lies within or partly within the target region 56. Preferably, a target region 56 can be measured by measuring a plurality of target portions 55 that lie therein.

In some embodiments, an object under test 50 can be measured by first positioning the object under test 50 in the measurement region 30. Then, without changing the distance between the object under test 50 and the antennas 10a, 10b, the relative positioning between the object under test 50 and the antennas 10a, 10b can be changed (e.g., in a scanning manner) through a plurality of sub-motions. After each sub-motion a respective target portion 55 within a target region 56 can be positioned in the measurement region 30.

In the target region 56 a plurality of target portions 55 can be defined. The target portions 55 can be defined within the target region 56 with a density of 5 to 10 target portions 55 per centimetre square, such as, 8 target portions 55 per centimetre square. Moreover, the target portions 55 can be uniformly distributed within the target region 54. As illustrated in Fig. 7b, the target portions 55 in the target region 56B are arranged to form a grid.

The target portions 55 can comprise an area between 50 to 500 millimetre square, preferably 130 to 150 millimetre square, such as, 140 millimetre square. For example, the target portions 55 can comprise a width of 14 mm and a height of 10 mm.

The relative position between the object under test 50 and the antennas 10a, 10b can be changed such that each target portion 55 can be measured. This can be performed based on a plurality of sub-motions of the object under test 50 and/or of the antennas 10a, 10b. For example, after each sub-motion the object under test 50 and the antennas 10a, 10b can be arranged such that the boresight of the antennas 10a, 10b intercepts with a respective target portion 55. In other words, after each sub-motion a respective target portion is in the measurement region. Thus, each target portion 55 can be traversed by a respective measurement signa, hence allowing determining for each target portion 55 at least one respective property.

Fig. 8 illustrates a method according to an embodiment of the present invention to determine at least one property of a target portion 55 of an object under test 50.

In a step S1 the method can comprise obtaining at least one reference. This can be performed is illustrated in Figs. 3 and 4. In some embodiments, the method can comprise measuring the reference prior to measuring each object under test 50. This can be advantageous as it can increase accuracy. For example, the path loss of the measurement region may vary due to changes in temperature, humidity and/or content of the air (e.g., presence of dust particles). Thus, a reference indicative of the path loss of the measurement region 30 can become outdated. Measuring the path loss of the measurement region 30 (see Fig. 3) shortly prior to measuring the object under test 50 can increase the likelihood of the reference better indicating the effect of the measurement region on the electromagnetic waves.

In a step S2 the method can comprise providing the object under test 50 and in particular a target potion 55 of the object under test 50 can be positioned in the measurement region 30. More particularly, in step S2 a relative position between the measurement system 1 and the object under test 50 can be changed such that the object under test 50 and in particular a target potion 55 of the object under test 50 can be positioned in the measurement region 30. Step S2 can comprise utilizing the positioning apparatus (see Fig. 5) and/or the handling apparatus (see Fig. 6).

In a step S3 the method can comprise transmitting a measurement signal 40 such that it can traverse the target portion 55 of the object under test 50 positioned in the measurement region 30. As discussed in Figs. 1 and 2, this can be performed by utilizing the first antenna 10a. For example, the processing system 20 can trigger the first antenna 10a to transmit the measurement signal 40.

In a step S4 the method can comprise receiving a received portion 45 of the measurement signal 40. As discussed in Figs. 1 and 2, this can be performed by utilizing the second antenna 10b. For example, the processing system 20 can trigger the second antenna 10b to receive electromagnetic signals.

In a step S5 the method can comprise obtaining a thickness of the target portion 55. The thickness can either be predetermined and stored in a memory device 62 (see Fig. 1). In such embodiments, step S5 can comprise receiving the thickness from the memory device 62. In some embodiments, the thickness can be input by a user via a user interface 64. In such embodiments, step S5 can comprise receiving the thickness from the user interface 64. Alternatively or additionally, a thickness measuring device 60 can be utilized. In such embodiments, step S5 can comprise measuring the thickness (or data indicative of the thickness) by utilizing the thickness measuring device 60.

In some embodiments, the thickness measuring device 60 may be a device external to the measuring system 1. In such embodiments, step S5 can be performed independently from the rest of the steps of the method. For example, step S5 can be performed prior to step S2. Alternatively, the thickness measuring device 60 can be part of the measuring system 1, e.g., as illustrated in Fig. 2. In such embodiments, step 5 can be performed concurrently with steps S3 and S4.

In a step S6, the method can comprise determining at least one property of the target portion based on the received portion 45 of the measurement signal 40 and on the thickness of the target portion 55. Step S6 can be performed by the processing system 20.

Fig. 9 illustrates an iterative method according to an embodiment of the present invention to determine at least one property for each of a plurality of target portions 55 of the object under test 50.

In addition to the steps of the method illustrated in Fig. 8, the method of Fig. 9 further comprises steps S7 and S8, which create a loop allowing steps S2' to S6 to be repeated for each target portion 55 of the object under test 50. In particular, step S8 checks whether a counter i is smaller than a number N, wherein N represents the number of the target portions 55. Step S7 increments the counter.

Moreover, step S2' can comprise initially (i.e., when $i=0$) providing an object under test in the measurement region 30, such that, an initial target portion (i.e., TP(0)) is in the measurement region 30. After that, step S2' can comprise changing a relative position between the object under test 50 and the measuring system 1, such that the next target portion 55 is positioned in the measurement region 30.

As used herein, including in the claims, singular forms of terms are to be construed as also including the plural form, unless the context indicates otherwise. Thus, it should be noted that as used herein, the singular forms "a," "an," and "the" include plural references unless the context clearly dictates otherwise.

Throughout the description and claims, the terms "comprise", "including", "having", and "contain" and their variations should be understood as meaning "including but not limited to", and are not intended to exclude other components.

The present invention also covers the exact terms, features, values and ranges etc. in case these terms, features, values and ranges etc. are used in conjunction with terms such as about, around, generally, substantially, essentially, at least etc. (i.e., "about 3" shall also cover exactly 3 or "substantially constant" shall also cover exactly constant).

The term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

It will be appreciated that variations to the foregoing embodiments of the invention can be made while still falling within the scope of the invention. Alternative features serving the same, equivalent or similar purpose can replace features disclosed in the specification, unless stated otherwise. Thus, unless stated otherwise, each feature disclosed represents one example of a generic series of equivalent or similar features

Use of exemplary language, such as "for instance", "such as", "for example" and the like, is merely intended to better illustrate the invention and does not indicate a limitation on the scope of the invention unless so claimed. Any steps described in the specification may be performed in any order or simultaneously, unless the context clearly indicates otherwise.

All of the features and/or steps disclosed in the specification can be combined in any combination, except for combinations where at least some of the features and/or steps are mutually exclusive. In particular, preferred features of the invention are applicable to all aspects of the invention and may be used in any combination.

**Claims**

1. A method comprising:

   utilizing a measuring system (1) comprising a first antenna (10a) and a second antenna (10b) facing each other from opposite sides of a measurement region (30);
   transmitting with the first antenna (10a) a measurement signal (40) through the measurement region (30), while a target portion (55) of an object under test (50) is in the measurement region (30) such that the measurement signal (40) traverses through the target portion (55);
   receiving with the second antenna (10b) a received portion (45) of the measurement signal (40);
   determining at least one property of the target portion (55) based on the received portion (45) of the measurement signal (40) and a thickness of the target portion (55).

2. The method according to the preceding claim, wherein determining at least one property of the target portion (55) comprises determining a reflection property.

3. The method according to any of the preceding claims, wherein determining at least one property of the target portion (55) comprises determining an effective permittivity.

4. The method according to any of the preceding claims, wherein the method comprises determining at least one object property of the object under test (50) based on the at least one property of the target portion (55) and wherein the object property indicates a validation of the transparency of the object under test (50) at microwave frequencies, such as, at 20-160 GHz.

5. The method according to any of the preceding claims, wherein the object under test (50) consists of multiple layers and wherein at least two of the layers comprise different materials.

6. The method according to any of the preceding claims, wherein the method comprises determining a transmission property of the target portion (55) wherein determining the transmission property of the target portion (55) is based on the amplitude of the measurement signal (40) as transmitted and on the amplitude of the received portion (45) of the measurement signal (40).

7. The method according to any of the preceding claims, wherein the method comprises obtaining the thickness of the target portion (55).

8. The method according to the preceding claims, wherein obtaining the thickness of the target portion (55) comprises receiving a predetermined thickness of the target portion (55) from a memory device (62).

9. The method according to any of the 2 preceding claims, wherein obtaining the thickness of the target portion (55) comprises measuring the thickness of the target portion (55) by utilizing a thickness measuring device (60).

10. The method according to the preceding claim, wherein the step of measuring the thickness of the target portion (55) is performed

    during the step of transmitting with the first antenna (10a) the measurement signal (40) through the measurement region (30), while the target portion (55) of the object under test (50) is in the measurement region (30) and/or
    during the step of receiving with the second antenna (10b) the received portion (45) of the measurement signal (40).

11. The method according to any of the preceding claims, wherein the method comprises

    determining the at least one property of the target portion (55) further based on at least one reference,
    performing a reference measurement to determine the at least one reference wherein performing a reference measurement comprises at least one of:

       performing the reference measurement with an empty measurement region (30) thereby obtaining at least one empty reference and
       performing the reference measurement with a reference sample (57) in the measurement region (30) thereby obtaining at least one sampled reference.

12. The method according to any of the preceding claims, wherein the method comprises defining a plurality of target portions (55) of the object under test (50),

    changing the relative position between the object under test (50) and the measuring system (1),
    wherein changing the relative position between the object under test (50) and the measuring system (1) comprises a plurality of sub-motions, wherein after each sub-motion a respective target portion (55) of the plurality of target portions (55) is positioned in the measurement region (30),

wherein the method is performed iteratively for each target portion (55), thereby determining for each target portion (55) of the plurality of target portions (55) at least one respective property based on the respective received portion (45) of the respective measurement signal (40) and a respective thickness of the target portion (55).

13. A measuring system (1), comprising:

a first antenna (10a), a second antenna (10b) and a processing system (20), wherein

the first antenna (10a) and the second antenna (10b) are configured to face each other from opposite sides of a measurement region (30),

the first antenna (10a) is configured to transmit a measurement signal (40) through the measurement region (30) and,

the second antenna (10b) is configured to receive a received portion (45) of the measurement signal (40), and

the processing system (20) is configured to determine at least one property of a target portion (55) of an object under test (50) placed in the measurement region (30) based on the received portion (45) of the measurement signal (40) and a thickness of the target portion (55).

14. The measuring system according to the preceding claim, wherein the measuring system (1) comprises a clamp structure (70), wherein the clamp structure (70) comprises:

a first arm (72) configured for mounting therein or thereon the first antenna (10a) and a second arm (74) configured for mounting therein or thereon the second antenna (10b) and a base frame (75), wherein the first arm (72) and the second arm (74) protrude from the same side of the base frame (75).

15. The measuring system according to any of the 2 preceding claims, wherein the measuring system (1) is configured to carry out the method according to any of the claims 1 to 12.

**Fig. 1**

Fig. 2

**Fig. 3**

**Fig. 4**

EP 4 198 502 A1

**Fig. 5**

EP 4 198 502 A1

Fig. 6

**Fig. 7a**

**Fig. 7b**

**Fig. 8**

**Fig. 9**

Europäisches
Patentamt

European
Patent Office

Office européen
des brevets

# EUROPEAN SEARCH REPORT

Application Number

EP 21 21 5692

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 358 772 A (LEGGETT HYMAN) 9 November 1982 (1982-11-09) | 1-10,13, 15 | INV. G01N22/00 |
| Y | * column 1, lines 10-13 * * column 9; example 35 * * table II * * table III * | 11,12,14 | G01R27/26 ADD. G01R29/08 G01S7/40 |
| | ----- | | |
| Y | WO 2021/209508 A1 (PERISENS GMBH [DE]) 21 October 2021 (2021-10-21) * page 20, line 19 - page 21, line 8 * * figures 3,4 * | 11,14 | |
| | ----- | | |
| Y | US 2021/349138 A1 (PFEIFFER FLORIAN [DE]) 11 November 2021 (2021-11-11) | 12 | |
| A | * paragraph [0057] * * paragraph [0250] * * paragraph [0262] * * paragraph [0263] * * figure 3 * | 14 | |
| | ----- | | |
| A | CN 111 929 508 A (41ST INST CHINA ELECTRONICS TECH GROUP CORP) 13 November 2020 (2020-11-13) * abstract * * example 2 * | 1-15 | TECHNICAL FIELDS SEARCHED (IPC) G01N G01R G01S |
| | ----- | | |

The present search report has been drawn up for all claims

| Place of search | Date of completion of the search | Examiner |
|---|---|---|
| The Hague | 19 May 2022 | Traversa, Marzia |

EPO FORM 1503 03.82 (P04C01)

**EP 4 198 502 A1**

## ANNEX TO THE EUROPEAN SEARCH REPORT
## ON EUROPEAN PATENT APPLICATION NO.

EP 21 21 5692

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2022

| Patent document cited in search report | | Publication date | Patent family member(s) | | Publication date |
|---|---|---|---|---|---|
| US 4358772 | A | 09-11-1982 | FR 2483689 A1 | | 04-12-1981 |
| | | | GB 2075269 A | | 11-11-1981 |
| | | | IL 62510 A | | 30-09-1983 |
| | | | US 4358772 A | | 09-11-1982 |
| WO 2021209508 | A1 | 21-10-2021 | NONE | | |
| US 2021349138 | A1 | 11-11-2021 | CN 112840225 A | | 25-05-2021 |
| | | | EP 3864430 A1 | | 18-08-2021 |
| | | | US 2021349138 A1 | | 11-11-2021 |
| | | | WO 2020074667 A1 | | 16-04-2020 |
| CN 111929508 | A | 13-11-2020 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5371505 A
- US 3936736 A
- EP 3258288 A1
- US 5066921 A

### Non-patent literature cited in the description

- **F. PFEIFFER ; E. M. BIEBL.** Inductive Compensation of High-Permittivity Coatings on Automobile Long-Range Radar Radomes. *IEEE Transactions on Microwave Theory and Techniques,* November 2009, vol. 57 (11), 2627-2632